(19) Europäisches Patentamt
European Patent Office
Office européen des brevets

(11) **EP 4 610 707 A1**

(12) **EUROPEAN PATENT APPLICATION**
published in accordance with Art. 153(4) EPC

(43) Date of publication:
**03.09.2025  Bulletin 2025/36**

(21) Application number: **23927198.4**

(22) Date of filing: **12.12.2023**

(51) International Patent Classification (IPC):
*G02B 13/00* (2006.01)    *G02B 13/06* (2006.01)
*G02B 13/18* (2006.01)    *G03B 17/12* (2021.01)
*G03B 30/00* (2021.01)

(52) Cooperative Patent Classification (CPC):
**G02B 13/00; G02B 13/06; G02B 13/18;
G03B 17/12; G03B 30/00**

(86) International application number:
**PCT/CN2023/138124**

(87) International publication number:
**WO 2024/187858 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2023  CN 202310265591**

(71) Applicant: **Huawei Technologies Co., Ltd.
Shenzhen, Guangdong 518129 (CN)**

(72) Inventors:
• **LONG, Sichen
Shenzhen, Guangdong 518129 (CN)**
• **ZHANG, Kaiyuan
Shenzhen, Guangdong 518129 (CN)**
• **LU, Ranran
Shenzhen, Guangdong 518129 (CN)**

(74) Representative: **Gill Jennings & Every LLP
The Broadgate Tower
20 Primrose Street
London EC2A 2ES (GB)**

(54) **OPTICAL SYSTEM, LENS MODULE AND ELECTRONIC DEVICE**

(57)    Embodiments of this application disclose an optical system, a lens module, and an electronic device, and relate to the field of optical technologies, to resolve an existing problem that a size of a lens is increased due to an increase in an area of a photosensitive element or an increase in a stop in the lens. The optical system in embodiments of this application includes a stop, a first lens, a second lens, ..., an $(N-2)^{th}$ lens, an $(N-1)^{th}$ lens, and an $N^{th}$ lens that are sequentially spaced apart along an optical axis from an object side to an image side. The first lens has positive focal power. Each of the second lens to the $(N-2)^{th}$ lens has focal power. A value of N is 7 or 8. The $(N-1)^{th}$ lens has positive focal power. An object side surface that is of the $(N-1)^{th}$ lens and that is near the optical axis is a convex surface, and an image side surface that is of the $(N-1)^{th}$ lens and that is near the optical axis is a concave surface. The $N^{th}$ lens has negative focal power. An object side surface that is of the $N^{th}$ lens and that is near the optical axis is a concave surface, and an image side surface that is of the $N^{th}$ lens and that is near the optical axis is a convex surface. The optical system further satisfies the following conditions: $-4 \leq SAGn_2/CT_n \leq -2$, $1 \leq SPn-1/(CTn-1+CTn) \leq 1.8$, and $(2 \times IMH/TTL)^2/FNO \geq 1.5$.

FIG. 5

**Description**

This application claims priority to Chinese Patent Application No. 202310265591.4, filed with the China National Intellectual Property Administration on March 10, 2023 and entitled "OPTICAL SYSTEM, LENS MODULE, AND ELECTRONIC DEVICE", which is incorporated herein by reference in its entirety.

**TECHNICAL FIELD**

This application relates to the field of optical technologies, and in particular, to an optical system, a lens module, and an electronic device.

**BACKGROUND**

Currently, there is a high demand for use of lenses on portable electronic devices to shoot external videos and photos. Therefore, requirements for the lenses on the portable electronic devices are increasingly high. A mobile phone is used as an example. A size of a photosensitive element in a lens module of an existing mobile phone is relatively small, and the relatively small photosensitive element limits a signal-to-noise ratio of image shooting, affecting image shooting experience of a user.

To further improve an amount of light admitted to the photosensitive element, an area of the photosensitive element may be increased, and a stop in the lens module may be increased. However, both the two manners cause an increase in a lens size. This is not conducive to a miniaturization and ultra-thin size design of a portable electronic device.

**SUMMARY**

Embodiments of this application provide an optical system, a lens module, and an electronic device, to resolve an existing problem that a size of a lens is increased due to an increase in an area of a photosensitive element or an increase in a stop in the lens.

To achieve the foregoing objective, this application uses the following technical solutions.

According to a first aspect, an embodiment of this application provides an optical system. The optical system includes a stop, a first lens, a second lens, ..., an $(N-2)^{th}$ lens, an $(N-1)^{th}$ lens, and an $N^{th}$ lens that are sequentially spaced apart along an optical axis from an object side to an image side. The first lens has positive focal power. Each of the second lens to the $(N-2)^{th}$ lens has focal power. A value of N is 7 or 8. The $(N-1)^{th}$ lens has positive focal power. An object side surface that is of the $(N-1)^{th}$ lens and that is near the optical axis is a convex surface, and an image side surface that is of the $(N-1)^{th}$ lens and that is near the optical axis is a concave surface. The $(N-1)^{th}$ lens is of a convex-concave surface type near the optical axis. This helps converge light, thereby helping shorten a back focal length and a total length of the optical system. At least one of the object side surface and the image side surface of the $(N-1)^{th}$ lens has an inflection surface. Disposing the inflection surface on the $(N-1)^{th}$ lens can balance refraction power distribution in a direction perpendicular to the optical axis, thereby helping correct an aberration of an off-axis field of view, and improving imaging quality of the optical system. The $N^{th}$ lens has negative focal power. An object side surface that is of the $N^{th}$ lens and that is near the optical axis is a concave surface, and an image side surface that is of the $N^{th}$ lens and that is near the optical axis is a convex surface. The $N^{th}$ lens is of a concave-convex surface type near the optical axis. This helps correct an aberration generated by the $(N-1)^{th}$ lens, thereby further improving the imaging quality of the optical system. At least one of the object side surface and the image side surface of the $N^{th}$ lens has an inflection surface. Similarly, disposing the inflection surface on the $N^{th}$ lens can balance refraction power distribution in the direction perpendicular to the optical axis, thereby helping correct an aberration of an off-axis field of view, and improving the imaging quality of the optical system.

The optical system further satisfies the following condition: $-4 \leq SAG_{n2}/CT_n \leq -2$. $SAG_{n2}$ is a maximum sagittal height of the image side surface of the $N^{th}$ lens, and $CT_n$ is a center thickness of the $N^{th}$ lens along an optical axis direction. The $N^{th}$ lens is designed to have a sagittal height range and a center thickness range along the optical axis direction that match another lens in the optical system. This helps reduce a height of a lens module when ensuring processability of the $N^{th}$ lens.

The optical system further satisfies the following condition: $1 \leq SP_{n-1}/(CT_{n-1}+CT_n) \leq 1.8$. $SP_{n-1}$ is a thickness of an air gap between the $(N-1)^{th}$ lens and the $N^{th}$ lens along the optical axis direction, and $CT_{n-1}$ is a center thickness of the $(N-1)^{th}$ lens along the optical axis direction. A ratio of the thickness of the air gap between the $(N-1)^{th}$ lens and the $N^{th}$ lens to a sum of the center thickness of the $(N-1)^{th}$ lens along the optical axis direction and the center thickness of the $N^{th}$ lens along the optical axis direction is designed to be within the foregoing range, so that relative positions of the $(N-1)^{th}$ lens and the $N^{th}$ lens may be limited, thereby helping balance an aberration of the optical system and reducing the total length of the optical system.

The optical system further satisfies the following condition: $(2 \times IMH/TTL)^2/FNO \geq 1.5$. IMH is a half-image height of the optical system. TTL (total track length) is a distance from an object side surface of the first lens to an imaging plane along the optical axis direction, and FNO is an F-number of the optical system. A relational equation of the half-image height IMH, the total track length TTL, and the F-number FNO of the optical system is designed to be greater than or equal to 1.5. This can effectively improve an amount of light admitted to the optical system and reduce the total length of the optical system. In this way, a design of the lens module that takes into account features of a large target surface, ultra-thin, and a large aperture is implemented.

In some embodiments, the value of N is 7. The optical system includes the first lens, the second lens, the third lens, the fourth lens, the fifth lens, the sixth lens, and the seventh lens that are sequentially spaced apart along the optical axis from the object side to the image side. The first lens and the fourth lens have positive focal power. The second lens and the third lens both have negative focal power. The fifth lens has focal power, that is, the fifth lens may have positive focal power, or may have negative focal power. The sixth lens has positive focal power. An object side surface that is of the sixth lens and that is near the optical axis is a convex surface, and an image side surface that is of the sixth lens and that is near the optical axis is a concave surface. In addition, at least one of the object side surface and the image side surface of the sixth lens has an inflection surface. The seventh lens has negative focal power. An object side surface that is of the seventh lens and that is near the optical axis is a concave surface, and an image side surface that is of the seventh lens and that is near the optical axis is a convex surface. In addition, at least one of the object side surface and the image side surface of the seventh lens has an inflection surface. Similarly, the seven lenses in the optical system may correct an aberration of the optical system by using the foregoing different focal power, shape combinations, and parameter designs, to implement high-quality imaging of the optical system. In addition, the optical system may have a relatively small size in a height direction of the lens module. Therefore, the lens module in this embodiment of this application may implement a miniaturization and ultra-thin size design of a portable electronic device when ensuring a relatively large amount of light admitted.

In addition, for the optical system having seven lenses, in some embodiments, the optical system further satisfies the following condition: $1.8 \leq CT_1/(CT_2+CT_3) \leq 3$. $CT_1$ is a center thickness of the first lens along the optical axis direction, $CT_2$ is a center thickness of the second lens along the optical axis direction, and $CT_3$ is a center thickness of the third lens along the optical axis direction. A relational expression of the center thickness of the first lens along the optical axis direction, the center thickness of the second lens along the optical axis direction, and the center thickness of the third lens along the optical axis direction is designed to satisfy the foregoing range. This helps implement smooth transition of light between the first lens, the second lens, and the third lens, thereby improving the imaging quality of the optical system.

For the optical system having seven lenses, in some embodiments, the optical system further satisfies the following condition: $-4 \leq f_{23}/f_1 \leq -1$. $f_{23}$ is a combined focal length of the second lens and the third lens, and $f_1$ is a focal length of the first lens. The combined focal length may be obtained through calculation according to an existing formula, and details are not described herein. A relational expression of the focal length of the first lens and the combined focal length of the second lens and the third lens is designed to be within the foregoing range. This helps balance an aberration of the optical system, thereby improving the imaging quality of the optical system.

For the optical system having seven lenses, in some embodiments, the optical system further satisfies the following condition: $1 \leq (CT_3+CT_4)/(ET_3+ET_4) \leq 2$. $CT_3$ is the center thickness of the third lens along the optical axis direction, $CT_4$ is a center thickness of the fourth lens along the optical axis direction, $ET_3$ is an edge thickness of the third lens along the optical axis direction, and $ET_4$ is an edge thickness of the fourth lens along the optical axis direction. A relational expression of the center thickness and the edge thickness of the third lens along the optical axis direction and the center thickness and the edge thickness of the fourth lens along the optical axis direction is designed to satisfy the foregoing range. This may ensure processability of the third lens and the fourth lens.

For the optical system having seven lenses, in some embodiments, the optical system further satisfies the following condition: $2.5 \leq AB_1/AB_2 \leq 6$. $AB_1$ is an Abbe number of the first lens, and $AB_2$ is an Abbe number of the second lens. A ratio of the Abbe number of the first lens to the Abbe number of the second lens is designed to satisfy the foregoing range, so that the first lens and the second lens may be manufactured by using a proper material, to correct dispersion of the optical system, thereby further helping reduce the height of the lens module.

For the optical system having seven lenses, in some embodiments, the optical system further satisfies the following condition: $f \times \tan(HFOV) > 6$ mm. $f$ is an effective focal length of the optical system, and HFOV is a maximum half field of view of the optical system. A product of the effective focal length $f$ of the optical system and a tangent value of the maximum half field of view of the optical system is designed to satisfy the foregoing range. This may further help the optical system be applied to a portable electronic device that has a demand for an ultra-thin lens design and a demand for a large-size photosensitive element.

In some other embodiments, the value of N is 8. The optical system includes the first lens, the second lens, the third lens, the fourth lens, the fifth lens, the sixth lens, the seventh lens, and the eighth lens that are sequentially spaced apart along the optical axis from the object side to the image side. The first lens and the fifth lens have positive focal power. The second lens has negative focal power, and an image side surface that is of the second lens and that is near the optical axis is a concave surface. The third lens, the fourth lens, and the sixth lens have focal power. That is, the third lens may have positive focal power, or may have negative focal power; the fourth lens may have positive focal power, or may have negative focal power; and the sixth lens may have positive focal power, or may have negative focal power. In addition, an object side surface that is of the third lens and that is near the optical axis is a convex surface. An image side surface that is of the sixth lens and that is near the optical axis is a concave surface. The seventh lens has positive focal power. An object side surface that is of the seventh lens and that is near the optical axis is a convex surface, and an image side surface that is of the seventh lens and that is near the optical axis is a concave surface. In addition, at least one of the object side surface and the image side surface of the seventh lens has an inflection surface. The eighth lens has negative focal power. An object side surface that is of the eighth lens and that is near the optical axis is a concave surface, and an image side surface that is of the eighth lens and that is near the optical axis is a convex surface. In addition, at least one of the object side surface and the image side surface of the eighth lens has an inflection surface. Similarly, the eight lenses in the optical system may correct an aberration of the optical system by using the foregoing different focal power, shape combinations, and parameter designs, to implement high-quality imaging of the optical system. In addition, the optical system may have a relatively small size in a height direction of the lens module. Therefore, the lens module in this embodiment of this application may implement a miniaturization and ultra-thin size design of a portable electronic device when ensuring a relatively large amount of light admitted.

For the optical system having eight lenses, in some embodiments, the optical system further satisfies the following condition: $1.3 \leq CT_3/CT_2 \leq 2$. A ratio of a center thickness of the third lens along the optical axis direction to a center thickness of the second lens along the optical axis direction is designed to satisfy the foregoing range. This helps implement smooth transition of light between the second lens and the third lens, thereby improving the imaging quality of the optical system.

For the optical system having eight lenses, in some embodiments, the optical system further satisfies the following condition: $0.7 \leq (R_{71}+R_{72})/f_7 \leq 1.6$. $R_{71}$ is a curvature radius of an object side surface of the seventh lens, $R_{72}$ is a curvature radius of an image side surface of the seventh lens, and $f_7$ is a focal length of the seventh lens. A ratio of a sum of the curvature radius of the object side surface and the curvature radius of the image side surface of the seventh lens to the focal length is designed to satisfy the foregoing range. This helps limit a shape of the seventh lens, thereby improving processability of the seventh lens. In addition, aberration contribution of the seventh lens is controlled, thereby further improving the imaging quality of the optical system.

For the optical system having eight lenses, in some embodiments, the optical system further satisfies the following condition: $-3 \leq f_{456}/f \leq -1$. $f_{456}$ is a combined focal length of the fourth lens, the fifth lens, and the sixth lens, and f is an effective focal length of the optical system. The combined focal length may be obtained through calculation according to an existing formula, and details are not described herein. A ratio of the combined focal length of the fourth lens, the fifth lens, and the sixth lens to the effective focal length of the optical system is designed to satisfy the foregoing range. This further helps correct an aberration of the optical system, thereby improving the imaging quality of the optical system.

For the optical system having eight lenses, in some embodiments, the optical system further satisfies the following condition: $2.4 \leq AB_1/AB_6 \leq 5$. $AB_1$ is an Abbe number of the first lens, and $AB_6$ is an Abbe number of the sixth lens. A ratio of the Abbe number of the first lens to the Abbe number of the sixth lens is designed to satisfy the foregoing range, so that the first lens and the sixth lens may be manufactured by using a proper material, to correct dispersion of the optical system, thereby further helping reduce the height of the lens module.

For the optical system having eight lenses, in some embodiments, near the optical axis, at least one of the object side surface of the first lens and an object side surface of the second lens is a convex surface. That is, the object side surface that is of the first lens and that is near the optical axis is a convex surface, and the object side surface that is of the second lens and that is near the optical axis is not a convex surface. Alternatively, the object side surface that is of the first lens and that is near the optical axis is not a convex surface, and the object side surface that is of the second lens and that is near the optical axis is a convex surface. Alternatively, both the object side surface that is of the first lens and that is near the optical axis and the object side surface that is of the second lens and that is near the optical axis are convex surfaces. A shape of the object side surface that is of the first lens and that is near the optical axis and a shape of the object side surface that is of the second lens and that is near the optical axis are designed, so that light incident to the optical system can be effectively converged, thereby helping reduce the total length of the optical system.

According to a second aspect, an embodiment of this application provides a lens module. The lens module includes the optical system in the foregoing embodiment and a photosensitive element. The optical system and the photosensitive element are sequentially disposed along an optical axis from an object side to an image side. Because a structure of the optical system in the lens module in this embodiment of this application is the same as that of the optical system in the foregoing embodiment, the optical system in the lens module in this embodiment of this application and the optical system in the foregoing embodiment can resolve same technical problems and obtain same technical effects. Details are not described herein again.

According to a third aspect, an embodiment of this application provides an electronic device, including a housing and the lens module in the foregoing embodiment. The lens module is disposed on the housing. Because a structure of the lens module in the electronic device in this embodiment of this application is the same as that of the lens module in the foregoing embodiment, the lens module in the electronic device in this embodiment of this application and the lens module in the foregoing embodiment can resolve same technical problems and obtain same technical effects. Details are not described herein again.

**BRIEF DESCRIPTION OF DRAWINGS**

To describe technical solutions in embodiments of this application, the following describes accompanying drawings used in embodiments of this application.

FIG. 1 is a three-dimensional front view of an electronic device according to some embodiments of this application;
FIG. 2 is a three-dimensional rear view of an electronic device according to some embodiments of this application;
FIG. 3 is an exploded view of the electronic device shown in FIG. 2;
FIG. 4 is a diagram of a structure of a lens module in an electronic device according to some embodiments of this application;
FIG. 5 is a diagram of a structure of a lens module (a lens module in Example 1) that includes seven lenses in an electronic device according to some embodiments of this application;
FIG. 6 is a diagram of a structure of a lens module (a lens module in Example 6) that includes eight lenses in an electronic device according to some embodiments of this application;
FIG. 7 is a line graph of a diffraction modulation transfer function of a lens module in Example 1;
FIG. 8 is a diagram of a structure of a lens module in Example 2;
FIG. 9 is a line graph of a diffraction modulation transfer function of a lens module in Example 2;
FIG. 10 is a diagram of a structure of a lens module in Example 3;
FIG. 11 is a line graph of a diffraction modulation transfer function of a lens module in Example 3;
FIG. 12 is a diagram of a structure of a lens module in Example 4;
FIG. 13 is a line graph of a diffraction modulation transfer function of a lens module in Example 4;
FIG. 14 is a diagram of a structure of a lens module in Example 5;
FIG. 15 is a line graph of a diffraction modulation transfer function of a lens module in Example 5;
FIG. 16 is a line graph of a diffraction modulation transfer function of a lens module in Example 6;
FIG. 17 is a diagram of a structure of a lens module in Example 7;
FIG. 18 is a line graph of a diffraction modulation transfer function of a lens module in Example 7;
FIG. 19 is a diagram of a structure of a lens module in Example 8;
FIG. 20 is a line graph of a diffraction modulation transfer function of a lens module in Example 8;
FIG. 21 is a diagram of a structure of a lens module in Example 9;
FIG. 22 is a line graph of a diffraction modulation transfer function of a lens module in Example 9;
FIG. 23 is a diagram of a structure of a lens module in Example 10; and
FIG. 24 is a line graph of a diffraction modulation transfer function of a lens module in Example 10.

Reference numerals:

1000: electronic device; 100: display; 200: housing; 201: middle frame; 202: rear housing; 300: mainboard; 400: lens module; 10: optical system; 1: stop; L1: first lens; L2: second lens; L3: third lens; L4: fourth lens; L5: fifth lens; L6: sixth lens; L7: seventh lens; L8: eighth lens; L(N-2): $(N-2)^{th}$ lens; L(N-1): $(N-1)^{th}$ lens; LN: $N^{th}$ lens; S1: object side surface; S2: image side surface; 20: photosensitive element; and 30: light filter.

**DESCRIPTION OF EMBODIMENTS**

To make the objectives, technical solutions, and advantages of this application clearer, the following further describes this application in detail with reference to accompanying drawings.
The terms such as "first" and "second" mentioned below are merely intended for a purpose of description, and shall not be understood as an indication or implication of relative importance or an implicit indication of a quantity of indicated technical features. Therefore, a feature limited by "first", "second", or the like may explicitly or implicitly include one or more features. In the descriptions of this application, unless otherwise stated, "a plurality of" means two or more.
In addition, in this application, orientation terms such as "up", "down", "left", "right", "horizontal", and "vertical" are defined relative to an orientation in which components are schematically placed in the accompanying drawings. It should be understood that, these directional terms are relative concepts that are used for relative description and clarification, and may vary accordingly based on changes of the orientation in which the components are placed in the accompanying drawings.
In this application, unless otherwise specified and limited, the term "connection" should be understood in a broad sense. For example, the term "connection" may be a connection of a mechanical structure or a connection of a physical structure. For example, the connection may be a fixed connection, or may be a detachable connection, or may be an integrated connection, or may be a direct connection, or may be an indirect connection through an intermediate medium. The connection may alternatively be understood that components are in physical contact and electrically conductive, or may be understood that different components in a line structure are connected through a physical line that can transmit an electrical signal, such as a PCB copper foil or a conducting wire.

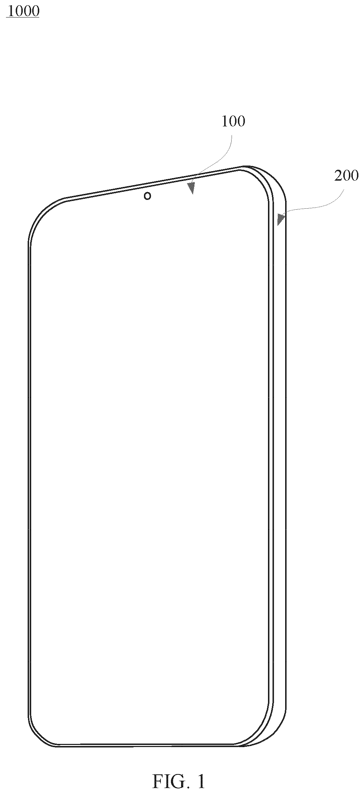

Embodiments of this application include an electronic device. The electronic device may include a device that requires a lens, such as a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. A specific form of the electronic device is not specially limited in embodiments of this application. For ease of description, the following is all described by using an example in which the electronic device is a mobile phone shown in FIG. 1.

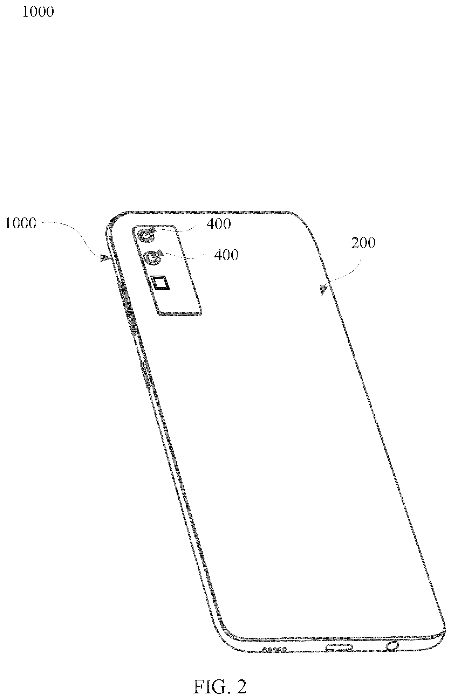

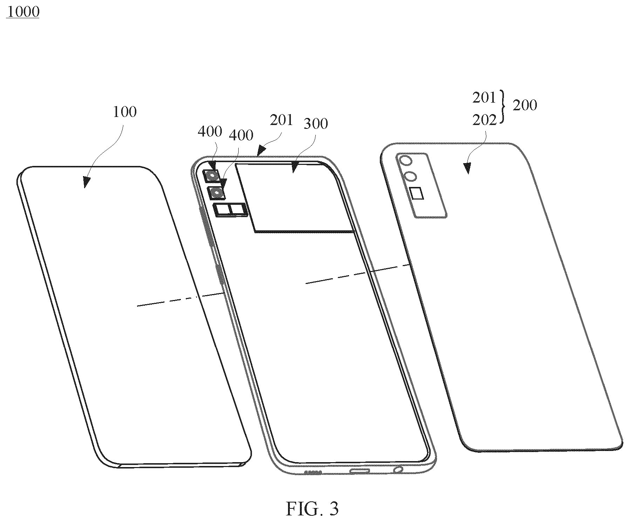

Refer to FIG. 1 to FIG. 3. FIG. 1 is a three-dimensional front view of an electronic device according to some embodiments of this application. FIG. 2 is a three-dimensional rear view of an electronic device according to some embodiments of this application. FIG. 3 is an exploded view of the electronic device shown in FIG. 2. It may be learned from the foregoing that the electronic device 1000 in this embodiment is a mobile phone. The electronic device 1000 may include a display 100, a housing 200, a mainboard 300, and a lens module 400 that are shown in FIG. 3.

It may be understood that FIG. 1, FIG. 2, and FIG. 3 only schematically show some components included in the electronic device 1000, and actual shapes, actual sizes, actual positions, and actual structures of these components are not limited by FIG. 1, FIG. 2, and FIG. 3. In some other examples, the electronic device 1000 further includes functional elements such as a processor, a receiver, a power module, and a communication module.

As shown in FIG. 3, the housing 200 includes a middle frame 201 and a rear housing 202. The middle frame 201 and the rear housing 202 form a mounting carrier of the functional elements (such as the display 100, the lens module 400, the processor, the receiver, the power module, and the communication module) and the mainboard 300 of the mobile phone.

It should be noted that the housing 200 shown in FIG. 1 may be of a bar-type as a whole. The housing 200 may further include a fixed part and a movable part that may implement relative sliding, so that the movable part may switch between a retracted state and an extended state. Alternatively, the housing 200 may include a plurality of housings that may rotate relative to each other, so that the housing 200 may switch between a folded state and an unfolded state. This is not limited in this application.

The lens module 400 may be built in the rear housing 202, or may protrude from an outer surface of the rear housing 202. Alternatively, the lens module 400 may be movably mounted in a mounting cavity enclosed by the middle frame 201 and the rear housing 202. When the lens module 400 needs to be used to shoot an external video or photo, the lens module 400 may be moved outside the housing 200. When no image shooting operation needs to be performed, the lens module 400 may be moved to (or located in) the mounting cavity enclosed by the middle frame 201 and the rear housing 202.

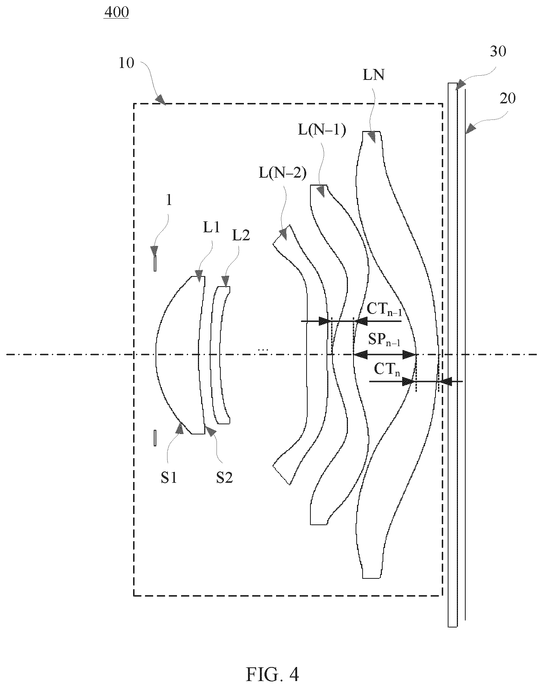

There may be one or more lens modules 400 in the mobile phone. This is not limited in this application. For example, the mobile phone 7000 includes a plurality of lens modules 400. One of the plurality of lens modules 400 is a main lens module of the mobile phone (the main lens module is usually a lens module with a highest pixel count in a rear-facing camera of the mobile phone). The following uses the main lens module of the mobile phone as an example for description. As shown in FIG. 4, the lens module 400 includes an optical system 10 and a photosensitive element 20. The optical system 10 and the photosensitive element 20 are sequentially disposed along an optical axis (a center line of the lens module 400 in FIG. 4 is the optical axis) from an object side to an image side. The optical system 10 is configured to perform correction processing on incident light. The photosensitive element 20 may receive emergent light of the optical system 10 to generate an image. Specifically, the photosensitive element 20 may be a complementary metal-oxide-conductor (Complementary Metal-Oxide-Semiconductor, CMOS) image sensor. It should be noted that the lens module 400 may further include another optical element. For example, the lens module 400 may further include a light filter 30 shown in FIG. 4. The light filter 30 may be disposed on an optical path from the optical system 10 to the photosensitive element 20. The light filter 30 may correct a color deviation, so that a color may be normally restored. In addition, the optical system 10 may be specifically an optical imaging system.

A size of the photosensitive element 20 in the main lens module of the mobile phone is relatively small, for example, is usually 1/1.56 inches or 1/1.28 inches. The relatively small photosensitive element 20 limits a signal-to-noise ratio of image shooting, affecting image shooting experience of a user. However, if the size of the photosensitive element 20 or a size of a stop 1 is directly increased to increase an amount of light admitted to the photosensitive element 20, a size of the lens module 400 is increased, and this is not conducive to a miniaturization and ultra-thin design of the mobile phone.

Therefore, to resolve this problem, still refer to FIG. 4. The optical system 10 in this embodiment of this application includes the stop 1, a first lens L1, a second lens L2, ..., an $(N-2)^{th}$ lens L(N-2), an $(N-1)^{th}$ lens L(N-1), and an $N^{th}$ lens LN that are sequentially spaced apart along the optical axis from the object side to the image side. A value of N is 7 or 8, that is, the optical system 10 includes seven lenses or eight lenses.

The stop 1 may be a stop with a constant aperture, or may be a stop with a variable aperture. This is not limited in this application. Each of the first lens L1, the second lens L2, ..., the (N-2)th lens L(N-2), the (N-1)th lens L(N-1), and the Nth lens LN has an object side surface S1 and an image side surface S2. The first lens L1 has positive focal power. Each of the second lens L2 to the (N-2)th lens L(N-2) has focal power. That is, each of the second lens L2 to the (N-2)th lens L(N-2) may have positive focal power, or may have negative focal power.

The (N-1)th lens L(N-1) has positive focal power. An object side surface S1 that is of the (N-1)th lens L(N-1) and that is near the optical axis is a convex surface, and an image side surface S2 that is of the (N-1)th lens L(N-1) and that is near the optical axis is a concave surface. The (N-1)th lens L(N-1) is of a convex-concave surface type near the optical axis. This helps converge light, thereby helping shorten a back focal length and a total length of the optical system 10. In addition, at least one of the object side surface S1 and the image side surface S2 of the (N-1)th lens L(N-1) has an inflection surface. That is, the object side surface S1 of the (N-1)th lens L(N-1) has an inflection surface, and the image side surface S2 of the (N-1)th lens L(N-1) does not have an inflection surface. Alternatively, the image side surface S2 of the (N-1)th lens L(N-1) has an inflection surface, and the object side surface S1 of the (N-1)th lens L(N-1) does not have an inflection surface. Alternatively, both the object side surface S1 and the image side surface S2 of the (N-1)th lens L(N-1) have inflection surfaces. It should be noted that, for an object side surface S1 or an image side surface S2 of any lens, a point whose second derivative of a surface curve is 0 is an "inflection point". A surface whose quantity of inflection points is greater than or equal to 1 is defined as an "inflection surface". Disposing the inflection surface on the (N-1)th lens L(N-1) can balance refraction power distribution in a direction perpendicular to the optical axis, thereby helping correct an aberration of an off-axis field of view, and improving imaging quality of the optical system 10.

The Nth lens LN has negative focal power. In addition, an object side surface S1 that is of the Nth lens LN and that is near the optical axis is a concave surface, and an image side surface S2 that is of the Nth lens LN and that is near the optical axis is a convex surface. The Nth lens LN is of a concave-convex surface type near the optical axis. This helps correct an aberration generated by the (N-1)th lens L(N-1), thereby further improving the imaging quality of the optical system 10. In addition, at least one of the object side surface S1 and the image side surface S2 of the Nth lens LN has an inflection surface. That is, the object side surface S1 of the Nth lens LN has an inflection surface, and the image side surface S2 of the Nth lens LN does not have an inflection surface. Alternatively, the image side surface S2 of the Nth lens LN has an inflection surface, and the object side surface S1 of the Nth lens LN does not have an inflection surface. Alternatively, both the object side surface S1 and the image side surface S2 of the Nth lens LN have inflection surfaces. Similarly, disposing the inflection surface on the Nth lens LN can balance refraction power distribution in the direction perpendicular to the optical axis, thereby helping correct an aberration of an off-axis field of view, and improving the imaging quality of the optical system 10.

It should be noted that thickness directions of the plurality of lenses are all parallel to the optical axis. A center of each lens may be located on the optical axis. Therefore, a center thickness in the following is a thickness of the lens at the center (the optical axis). An edge thickness is a thickness of the lens at an edge.

In addition, the optical system 10 further satisfies the following condition: $-4 \leq SAG_{n2}/CT_n \leq -2$. $SAG_{n2}$ is a maximum sagittal height of the image side surface S2 of the Nth lens LN, and $CT_n$ is a center thickness of the Nth lens LN along an optical axis direction. The Nth lens LN is designed to have a sagittal height range and a center thickness range along the optical axis direction that match another lens in the optical system 10. This may help reduce a height of the lens module 400 when ensuring processability of the Nth lens LN. For example, a value of $SAG_{n2}/CT_n$ is -4, -3.82, -3.61, -3.48, -3.37, -3.34, -3.32, -3.31, -3.21, -2.8, -2.69, -2.6, -2.37, or -2.

The optical system 10 further satisfies the following condition: $1 \leq SP_{n-1}/(CT_{n-1}+CT_n) \leq 1.8$. $SP_{n-1}$ is a thickness of an air gap between the (N-1)th lens L(N-1) and the Nth lens LN along the optical axis direction, and $CT_{n-1}$ is a center thickness of the (N-1)th lens L(N-1) along the optical axis direction. The thickness $SP_{n-1}$ of the air gap is a distance between the image side surface S2 of the (N-1)th lens L(N-1) and the object side surface S1 of the Nth lens LN. A ratio of the thickness of the air gap between the (N-1)th lens L(N-1) and the Nth lens LN to a sum of the center thickness of the (N-1)th lens L(N-1) along the optical axis direction and the center thickness of the Nth lens LN along the optical axis direction is designed to be within the foregoing range, so that relative positions of the (N-1)th lens L(N-1) and the Nth lens LN may be limited, thereby helping balance an aberration of the optical system 10 and reducing the total length of the optical system 10. For example, a value of $SAG_{n2}/CT_n$ is 1, 1.26, 1.27, 1.28, 1.34, 1.42, 1.43, 1.48, 1.52, 1.63, 1.75, or 1.8.

The optical system 10 further satisfies the following condition: $(2 \times IMH/TTL)^2/FNO \geq 1.5$. IMH is a half-image height of the optical system 10. TTL is a distance from an object side surface S1 of the first lens to an imaging plane (the photosensitive element 20) along the optical axis direction, and FNO is an F-number of the optical system 10. A relational expression of the half-image height IMH, the distance TTL from the object side surface S1 of the first lens to the imaging plane along the optical axis direction, and the F-number FNO of the optical system 10 is designed to be greater than or equal to 1.5. This can effectively improve an amount of light admitted to the optical system 10 and reduce the total length of the optical system. In this way, a design of the lens module 400 that takes into account features of a large target surface, ultra-thin, and a large aperture is implemented. For example, a value of $(2 \times IMH/TTL)^2/FNO$ is 1.5, 1.75, 1.76, 1.77, 1.79, or 1.82.

To implement the large target surface of the lens module 400, an amount of light admitted to the photosensitive element 20 needs to be relatively large. Therefore, the size of the photosensitive element 20 in the lens module 400 in this embodiment of this application is relatively large. According to the foregoing description, the plurality of lenses in the optical system 10 in this embodiment of this application use different focal power, shape combinations, and parameter designs, so that the optical system 10 may have a relatively small size in a height direction of the lens module 400, and an aberration of the optical system 10 may be corrected, to implement high-quality imaging of the optical imaging system. Therefore, the lens module 400 in this embodiment of this application may implement a miniaturization and ultra-thin size design of the mobile phone when ensuring a relatively large amount of light admitted.

It should be noted that each of the N lenses in the optical system 10 may include a plurality of aspheric surfaces. When the lens is designed, a sagittal height z of an aspheric surface of the lens may be calculated by using the following formula:

$$z = \frac{cr^2}{1 + \sqrt{1 - Kc^2r^2}} + \sum_i Air^i$$

Herein, r is a radial coordinate of the aspheric surface, c is a spherical curvature of a vertex of the aspheric surface, K is a conic coefficient, and Ai represents an $i^{th}$-order aspheric coefficient. A sagittal height of each position of the lens may be calculated according to the foregoing formula. The foregoing maximum sagittal height is a maximum value of the sagittal height of each position of the lens. The edge thickness ET of the lens is equal to the center thickness CT of the lens minus a sum $z_2$ of a sagittal height $z_1$ of the lens at an edge of the object side surface and a sagittal height of the lens at an edge of the image side surface, that is, $CT=ET-(z_1+z_2)$. For the lens of the optical system 10 in this embodiment of this application, calculation may alternatively be performed by using another aspheric sagittal height formula. This is not limited in this application.

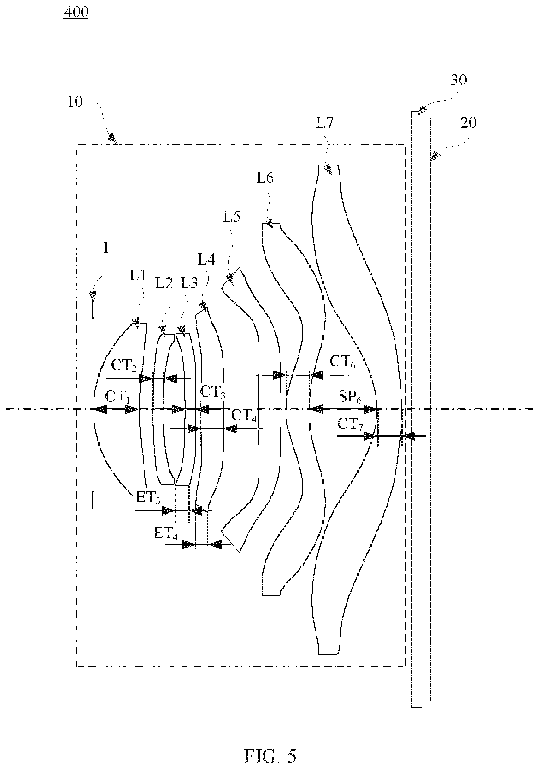

Based on the foregoing description, in some embodiments of this application, the value of N is 7, that is, the optical system 10 includes the first lens L1, the second lens L2, the third lens L3, the fourth lens L4, the fifth lens L5, the sixth lens L6, and the seventh lens L7 that are sequentially spaced apart along the optical axis from the object side to the image side, as shown in FIG. 5. The first lens L1 and the fourth lens L4 have positive focal power. The fourth lens L4 having positive focal power may converge emergent light of the third lens L3, thereby reducing the height of the lens module 400. The second lens L2 and the third lens L3 both have negative focal power. The second lens L2 and the third lens L3 that both have negative focal power may balance an aberration and dispersion of the optical system 10, thereby improving the imaging quality of the optical system 10. The fifth lens L5 has focal power, that is, the fifth lens L5 may have positive focal power, or may have negative focal power. The sixth lens L6 has positive focal power. An object side surface S1 that is of the sixth lens L6 and that is near the optical axis is a convex surface, and an image side surface S2 that is of the sixth lens L6 and that is near the optical axis is a concave surface. In addition, at least one of the object side surface S1 and the image side surface S2 of the sixth lens L6 has an inflection surface. The seventh lens L7 has negative focal power. An object side surface S1 that is of the seventh lens L7 and that is near the optical axis is a concave surface, and an image side surface S2 that is of the seventh lens L7 and that is near the optical axis is a convex surface. In addition, at least one of the object side surface S1 and the image side surface S2 of the seventh lens L7 has an inflection surface. Similarly, the seven lenses in the optical system 10 may correct an aberration of the optical system 10 by using the foregoing different focal power, shape combinations, and parameter designs, to implement high-quality imaging of the optical system 10. In addition, the optical system 10 may have a relatively small size in a height direction of the lens module 400. Therefore, the lens module 400 in this embodiment of this application may implement a miniaturization and ultra-thin size design of the mobile phone when ensuring a relatively large amount of light admitted.

Based on the optical system 10 having seven lenses, in some embodiments, the optical system 10 further satisfies the following condition: $1.8 \leq CT_1/(CT_2+CT_3) \leq 3$. $CT_1$ is a center thickness of the first lens L1 along the optical axis direction, $CT_2$ is a center thickness of the second lens L2 along the optical axis direction, and $CT_3$ is a center thickness of the third lens L3 along the optical axis direction. A relational expression of the center thickness of the first lens L1 along the optical axis direction, the center thickness of the second lens L2 along the optical axis direction, and the center thickness of the third lens L3 along the optical axis direction is designed to satisfy the foregoing range. This helps implement smooth transition of light between the first lens L1, the second lens L2, and the third lens L3, thereby improving the imaging quality of the optical system 10. For example, a value of $CT_1/(CT_2+CT_3)$ is 1.8, 2.13, 2.2, 2.21, 2.33, 2.37, 2.56, 2.92, or 3.

For the optical system 10 having seven lenses, in some embodiments, the optical system 10 further satisfies the following condition: $-4 \leq f_{23}/f_1 \leq -1$. $f_{23}$ is a combined focal length of the second lens L2 and the third lens L3, and $f_1$ is a focal length of the first lens L1. The combined focal length $f_{23}$ may be obtained through calculation according to an existing formula, and details are not described herein. A relational expression of focal power of the first lens L1, the second lens L2, and the third lens is designed to satisfy the foregoing range. This helps balance an aberration of the optical system 10, thereby improving the imaging quality of the optical system 10. For example, a value of $f_{23}/f_1$ is -4, -3.45, -3.96, -2.83, -2.65, -2.42, -2.23, -2.22, -2.21, -2.12, or -1.

For the optical system 10 having seven lenses, in some embodiments, the optical system 10 further satisfies the following condition: $1 \leq (CT_3+CT_4)/(ET_3+ET_4) \leq 2$. $CT_3$ is the center thickness of the third lens L3 along the optical axis direction, $CT_4$ is a center thickness of the fourth lens L4 along the optical axis direction, $ET_3$ is an edge thickness of the third lens L3 along the optical axis direction, and $ET_4$ is an edge thickness of the fourth lens L4 along the optical axis direction. A relational expression of the center thickness and the edge thickness of the third lens L3 along the optical axis direction and the center thickness and the edge thickness of the fourth lens L4 along the optical axis direction is designed to satisfy the foregoing range. This ensures processability of the third lens L3 and the fourth lens L4. For example, a value of $(CT_3+CT_4)/(ET_3+ET_4)$ is 1, 1.47, 1.55, 1.57, 1.59, 1.64, 1.75, 1.84, 1.96, or 2.

For the optical system 10 having seven lenses, in some embodiments, the optical system 10 further satisfies the following condition: $2.5 \leq AB_1/AB_2 \leq 6$. $AB_1$ is an Abbe number of the first lens L1, and $AB_2$ is an Abbe number of the second lens L2. A ratio of the Abbe number of the first lens L1 to the Abbe number of the second lens L2 is designed to satisfy the foregoing range, so that the first lens L1 and the second lens L2 may be manufactured by using a proper material, to correct dispersion of the optical system 10, thereby further helping reduce the height of the lens module 400. For example, a value of $AB_1/AB_2$ is 2.5, 2.72, 2.87, 2.95, 3.27, 3.59, 3.73, 3.91, 4.18, 4.32, 4.06, 4.15, 4.2, 4.4, 4.58, 4.77, 4.94, 5.22, 5.51, 5.77, 5.91, or 6.

For the optical system 10 having seven lenses, in some embodiments, the optical system 10 further satisfies the following condition: $f \times \tan(HFOV) > 6$ mm. f is an effective focal length of the optical system 10, and HFOV is a maximum half field of view of the optical system 10. A product of the effective focal length f of the optical system 10 and a tangent value of the maximum half field of view of the optical system 10 is designed to satisfy the foregoing range. This may further help the optical system 10 be applied to the mobile phone that has a demand for an ultra-thin lens design and a demand for a large-size photosensitive element 20. For example, a value of $f \times \tan(HFOV)$ is 8.09 mm, 8.1 mm, 8.12 mm, or 8.55 mm.

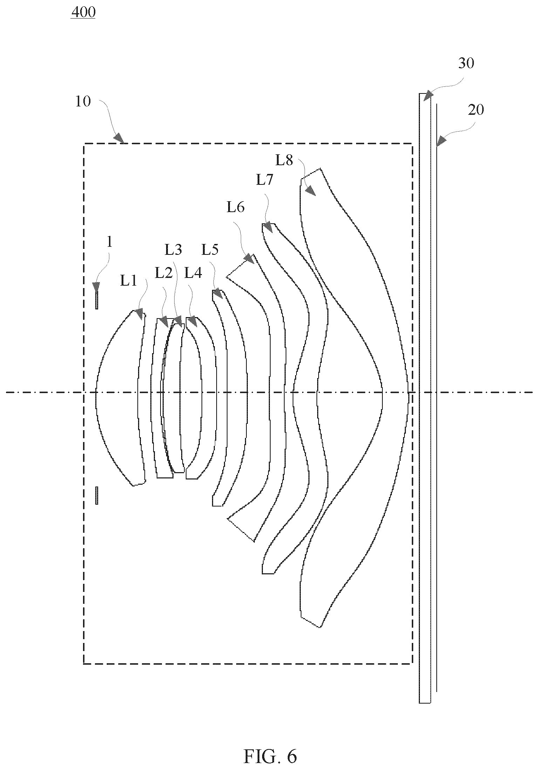

The foregoing is a description of the optical system 10 having seven lenses. In some other embodiments of this application, the value of N is 8, that is, the optical system 10 includes the first lens L1, the second lens L2, the third lens L3, the fourth lens L4, the fifth lens L5, the sixth lens L6, the seventh lens L7, and the eighth lens L8 that are sequentially spaced apart along the optical axis from the object side to the image side, as shown in FIG. 6. The first lens L1 and the fifth lens L5 have positive focal power. The fifth lens L5 having positive focal power may converge emergent beams of the fourth lens L4, thereby reducing the height of the lens module 400. The second lens L2 has negative focal power, and an image side surface S2 that is of the second lens L2 and that is near the optical axis is a concave surface, to implement smooth transition of light before and after the second lens L2, thereby improving the imaging quality of the optical system 10. The third lens L3, the fourth lens L4, and the sixth lens L6 have focal power. That is, the third lens L3 may have positive focal power, or may have negative focal power; the fourth lens L4 may have positive focal power, or may have negative focal power; and the sixth lens L6 may have positive focal power, or may have negative focal power. In addition, an object side surface S1 that is of the third lens L3 and that is near the optical axis is a convex surface, to converge emergent beams of the second lens L2, thereby reducing the height of the lens module 400. An image side surface S2 that is of the sixth lens L6 and that is near the optical axis is a concave surface, thereby implementing smooth transition of light before and after the sixth lens L6, and improving the imaging quality of the optical system 10. The seventh lens L7 has positive focal power. An object side surface S1 that is of the seventh lens L7 and that is near the optical axis is a convex surface, and an image side surface S2 that is of the seventh lens L7 and that is near the optical axis is a concave surface. In addition, at least one of the object side surface S1 and the image side surface S2 of the seventh lens L7 has an inflection surface. The eighth lens L8 has negative focal power. An object side surface S1 that is of the eighth lens L8 and that is near the optical axis is a concave surface, and an image side surface S2 that is of the eighth lens L8 and that is near the optical axis is a convex surface. In addition, at least one of the object side surface S1 and the image side surface S2 of the eighth lens L8 has an inflection surface. Similarly, the eight lenses in the optical system 10 may correct an aberration of the optical system 10 by using the foregoing different focal power, shape combinations, and parameter designs, to implement high-quality imaging of the optical system 10. In addition, the optical system 10 may have a relatively small size in a height direction of the lens module 400. Therefore, the lens module 400 in this embodiment of this application may implement a miniaturization and ultra-thin size design of the mobile phone when ensuring a relatively large amount of light admitted.

Based on the optical system 10 having eight lenses, in some embodiments, the optical system 10 further satisfies the following condition: $1.3 \leq CT_3/CT_2 \leq 2$. A ratio of a center thickness of the third lens L3 along the optical axis direction to a center thickness of the second lens L2 along the optical axis direction is designed to satisfy the foregoing range. This helps implement smooth transition of light between the second lens L2 and the third lens L3, thereby improving the imaging quality of the optical system 10. For example, a value of $CT_3/CT_2$ is 1.3, 1.59, 1.62, 1.63, 1.66, 1.71, 1.88, or 2.

For the optical system 10 having eight lenses, in some embodiments, the optical system 10 further satisfies the following condition: $0.7 \leq (R_{71}+R_{72})/f_7 \leq 1.6$. $R_{71}$ is a curvature radius of an object side surface S1 of the seventh lens L7, $R_{72}$ is a curvature radius of an image side surface S2 of the seventh lens L7, and $f_7$ is a focal length of the seventh lens L7. A relational expression of a ratio of a sum of the curvature radius of the object side surface S1 and the curvature radius of the image side surface S2 of the seventh lens L7 to the focal length is designed to satisfy the foregoing range. This helps limit a shape of the seventh lens L7, thereby improving processability of the seventh lens L7. In addition, aberration contribution of the seventh lens L7 is controlled, thereby further improving the imaging quality of the optical system 10. For example, a value of $(R_{71}+R_{72})/f_7$ is 0.7, 0.82, 0.98, 1.18, 1.24, 1.43, 1.46, 1.47, or 1.6.

For the optical system 10 having eight lenses, in some embodiments, the optical system 10 further satisfies the following condition: $-3 \le f_{456}/f \le -1$. $f_{456}$ is a combined focal length of the fourth lens L4, the fifth lens L5, and the sixth lens L6, and f is an effective focal length of the optical system 10. The combined focal length $f_{456}$ may be obtained through calculation according to an existing formula, and details are not described herein. A ratio of the combined focal length of the fourth lens L4, the fifth lens L5, and the sixth lens L6 to the effective focal length of the optical system 10 is designed to satisfy the foregoing range. This further helps correct an aberration of the optical system 10, thereby improving the imaging quality of the optical system 10. For example, a value of $(R_{71}+R_{72})/f_7$ is -3, -2.83, -2.46, -1.95, -1.67, -1.56, -1.55, -1.37, -1.36, or -1.

For the optical system 10 having eight lenses, in some embodiments, the optical system 10 further satisfies the following condition: $2.4 \le AB_1/AB_6 \le 5$. $AB_1$ is an Abbe number of the first lens L1, and $AB_6$ is an Abbe number of the sixth lens L6. A ratio of the Abbe number of the first lens L1 to the Abbe number of the sixth lens L6 is designed to satisfy the foregoing range, so that the first lens L1 and the sixth lens L6 may be manufactured by using a proper material, to correct dispersion of the optical system 10, thereby further helping reduce the height of the lens module 400. For example, a value of $AB_1/AB_6$ is 2.7, 3.02, 3.44, 3.88, 4.03, 4.21, 4.22, 4.45, 4.76, or 5.

For the optical system 10 having eight lenses, in some embodiments, near the optical axis, at least one of the object side surface S1 of the first lens L1 and an object side surface S1 of the second lens L2 is a convex surface. That is, the object side surface S1 that is of the first lens L1 and that is near the optical axis is a convex surface, and the object side surface S1 that is of the second lens L2 and that is near the optical axis is not a convex surface. Alternatively, the object side surface S1 that is of the first lens L1 and that is near the optical axis is not a convex surface, and the object side surface S1 that is of the second lens L2 and that is near the optical axis is a convex surface. Alternatively, both the object side surface S1 that is of the first lens L1 and that is near the optical axis and the object side surface S1 that is of the second lens L2 and that is near the optical axis are convex surfaces. A shape of the object side surface S1 that is of the first lens L1 and that is near the optical axis and a shape of the object side surface S1 that is of the second lens L2 and that is near the optical axis are designed, so that light incident to the optical system 10 can be effectively converged, thereby helping reduce the total length of the optical system 10.

The following further describes the lens module 400 in this application with reference to several specific examples.

**Example 1**

As shown in FIG. 5, a lens module 400 in this example includes a stop 1, an optical system 10, a light filter 30, and a photosensitive element 20 that are sequentially spaced apart along an optical axis from an object side to an image side. The stop 1 is a stop with a variable aperture. The optical system 10 includes seven (N=7) lenses, and the seven lenses are respectively a first lens L1, a second lens L2, a third lens L3, a fourth lens L4, a fifth lens L5, a sixth lens L6, and a seventh lens L7 that are sequentially spaced apart along the optical axis from the object side to the image side. The light filter 30 is an infrared (infrared ray, IR) filter. The photosensitive element 20 is a complementary metal-oxide-conductor image sensor.

The first lens L1 has positive focal power; and near the optical axis, an object side surface S1 is a convex surface, and an image side surface S2 is a concave surface. The first lens L1 can effectively converge light incident to the optical system 10, thereby helping shorten a total length of the optical system 10 and facilitating implementation of a miniaturization design. The second lens L2 has negative focal power; and near the optical axis, an object side surface S1 is a convex surface, and an image side surface S2 is a concave surface. The second lens L2 can balance an aberration of the optical system 10, thereby improving imaging quality of the optical system 10. The third lens L3 has negative focal power; and near the optical axis, an object side surface S1 is a concave surface, and an image side surface S2 is a concave surface. The third lens L3 with negative focal power is of a concave-concave surface type, and can effectively correct aberrations generated by the first lens L1 and the second lens L2, thereby further improving the imaging quality of the system. The fourth lens L4 has positive focal power; and near the optical axis, an object side surface S1 is a convex surface, and an image side surface S2 is a concave surface. The fourth lens L4 can also effectively converge emergent beams of the third lens L3, thereby helping shorten the total length of the optical system 10 and facilitating implementation of the miniaturization design. The fifth lens L5 has negative focal power; and near the optical axis, an object side surface S1 is a convex surface, and an image side surface S2 is a concave surface. The fifth lens L5 can balance an aberration of the optical system 10, thereby improving the imaging quality of the optical system 10. The sixth lens L6 has positive focal power; and near the optical axis, an object side surface S1 is a convex surface, and an image side surface S2 is a concave surface. The sixth lens L6 is of a convex-concave surface type near the optical axis. This helps converge light, thereby helping shorten a back focal length and the total length of the optical system 10. In addition, both the object side surface S1 and the image side surface S2 of the sixth lens L6 have inflection surfaces. The inflection surfaces on the sixth lens L6 can balance refraction power distribution in a direction perpendicular to the optical axis, thereby helping correct an aberration of an off-axis field of view, and improving the imaging quality of the optical system 10. The seventh lens L7 has negative focal power; and near the optical axis, an object side surface S1 is a concave surface, and an image side surface S2 is a convex surface. The seventh lens L7 with negative focal power is of a concave-convex surface type near the optical axis. This helps correct an aberration generated by the sixth lens L6, thereby further improving the imaging quality of the system. In addition, both the object side surface S1 and the image side surface S2 of the seventh lens L7 have inflection surfaces. Disposing the inflection surfaces on the seventh lens L7 can balance refraction power distribution in the direction perpendicular to the optical axis, thereby helping correct an aberration of an off-axis field of view, and improving the imaging quality of the optical system 10.

In addition, the lens module 400 satisfies the following conditions: $SAG_{72}/CT_7=-2.6$, $SP_6/(CT_6+CT_7)=1.42$, $(2\times IMH/TTL)^2/FNO=1.75$, $CT_1/(CT_2+CT_3)=2.21$, $f_{23}/f_1=-2.23$, $(CT_3+CT_4)/(ET_3+ET_4)=1.47$, $AB_1/AB_2=4.2$, and $f\times\tan(H\text{-}FOV)=8.10$ mm.

Therefore, the lens module 400 may have physical parameters in Table 1A, Table 1B, and Table 1C below.

Table 1A Optical parameters of the lens module in Example 1

| Optical parameter | Value |
|---|---|
| Focal length f/mm | 8.29 |
| F-number F# | 1.68 |
| Maximum half-image height IMH of the photosensitive element/mm | 8.32 |
| Half field of view HFOV/degree | 44.4 |
| Total track length TTL/mm | 9.7 |

Table 1B Physical parameters of elements in the lens module in Example 1

| Lens | Surface number | Curvature radius | Center thickness | Focal length | Refractive index | Abbe coefficient |
|---|---|---|---|---|---|---|
|  | Object surface | Unlimited | Unlimited |  |  |  |
|  | Stop | Unlimited | -0.100 |  |  |  |
| L1 | S1 | 3.163 | 1.338 | 9.08 | 1.50 | 83.10 |
|  | S2 | 9.045 | 0.371 |  |  |  |
| L2 | S1 | 12.620 | 0.298 | -59.30 | 1.67 | 19.80 |
|  | S2 | 9.487 | 0.620 |  |  |  |
| L3 | S1 | -44.066 | 0.308 | -30.81 | 1.68 | 19.25 |
|  | S2 | 39.689 | 0.142 |  |  |  |
| L4 | S1 | 10.749 | 0.658 | 27.09 | 1.55 | 56.14 |
|  | S2 | 38.500 | 0.993 |  |  |  |
| L5 | S1 | 61.108 | 0.636 | -15.21 | 1.57 | 39.14 |
|  | S2 | 7.577 | 0.169 |  |  |  |
| L6 | S1 | 2.150 | 0.664 | 6.84 | 1.55 | 56.14 |
|  | S2 | 4.522 | 1.947 |  |  |  |
| L7 | S1 | -2.263 | 0.706 | -8.45 | 1.55 | 54.72 |
|  | S2 | -4.923 | 0.286 |  |  |  |
| IR | S1 | Unlimited | 0.300 |  | 1.52 | 64.17 |
|  | S2 | Unlimited | 0.264 |  |  |  |
|  | Image plane | Unlimited | 0.000 |  |  |  |

Table 1C Conic coefficients and aspheric coefficients of lenses in Example 1

| Lens<br>Parameter | L1 | | L2 | | L3 | | L4 | | L5 | | L6 | | L7 | |
|---|---|---|---|---|---|---|---|---|---|---|---|---|---|---|
| | Surface number | | Surface number | | Surface number | | Surface number | | Surface number | | Surface number | | Surface number | |
| | S1 | S2 | S1 | S2 | S1 | S2 | S1 | S2 | S1 | S2 | S1 | S2 | S1 | S2 |
| Conic coefficient K | −3.04E−02 | −1.33E+00 | 4.03E+00 | 3.03E+00 | −8.08E+00 | −4.77E+01 | 7.72E+00 | −9.25E+01 | 3.95E+01 | −8.14E−02 | −1.00E+00 | −9.92E−01 | −9.99E−01 | −9.88E−01 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | −4.72E−04 | −2.96E−03 | −8.00E−03 | −2.23E−03 | −6.93E−03 | −6.36E−03 | −1.37E−02 | −8.62E−03 | −4.50E−03 | −6.21E−02 | −5.04E−02 | 2.50E−02 | 4.07E−02 | 4.18E−02 |
| A6 | 9.94E−04 | −1.14E−04 | 4.68E−03 | −9.56E−03 | −1.71E−02 | 1.76E−02 | 1.70E−02 | 2.54E−03 | −1.86E−03 | −2.74E−02 | 1.41E−02 | −2.04E−02 | −1.60E−02 | −1.46E−02 |
| A8 | −9.63E−04 | −1.29E−04 | −9.37E−03 | 4.49E−02 | −7.49E−02 | 3.53E−02 | 3.06E−02 | 6.48E−04 | −2.78E−04 | −9.40E−03 | −5.60E−03 | 6.77E−03 | 3.56E−03 | 2.84E−03 |
| A10 | 5.7 | 1.1 | 1.50 | − | 1.72 | − | − | 5.20 | 7.23 | 2.51 | 1.85 | − | − | − |

| Lens / Parameter | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 |
|---|---|---|---|---|---|---|---|---|---|---|---|---|---|---|
| | 7E-04 | 5E-04 | E-02 | 1.08 E-01 | E-01 | 4.77 E-02 | 3.41 E-02 | E-04 | E-04 | E-03 | E-03 | 1.45 E-03 | 4.66 E-04 | 3.56 E-04 |
| A12 | -2.21E-04 | -4.77E-05 | 1.51 E-02 | 1.69 E-01 | -2.54 E-01 | 4.75 E-01 | 2.68 E-02 | -6.30 E-04 | 5.70 E-04 | 5.60 E-04 | -4.38 E-04 | 2.10 E-04 | 3.98 E-05 | 3.07 E-05 |
| A14 | 5.42E-05 | 1.20E-05 | 1.03 E-02 | -1.79 E-01 | 2.57 E-01 | -3.58 E-02 | -1.52 E-02 | 3.44 E-04 | 2.50 E-04 | 9.99 E-05 | 7.07 E-05 | -2.12 E-05 | -2.36 E-06 | -1.88 E-06 |
| A16 | -8.25E-06 | -1.81E-06 | -4.69 E-03 | 1.33 E-01 | -1.84 E-01 | 2.04 E-02 | 6.30 E-03 | -1.16 E-04 | 6.96 E-05 | 1.34 E-05 | -7.84 E-06 | 1.50 E-06 | 1.00 E-07 | 8.31 E-08 |
| A18 | 7.09E-07 | 1.51E-07 | 1.40 E-03 | -7.10 E-02 | 9.47 E-02 | -8.71 E-03 | -1.90 E-03 | 2.55 E-05 | 1.29 E-05 | 1.26 E-06 | 6.08 E-07 | -7.45 E-08 | -3.12 E-09 | -2.68 E-09 |
| A20 | -2.65E-08 | -5.80E-09 | -2.36 E-04 | 2.72 E-02 | -3.53 E-02 | 2.76 E-03 | 4.18 E-04 | -3.50 E-06 | 1.61 E-06 | 7.61 E-08 | -3.34 E-08 | 2.49 E-09 | 7.10 E-11 | 6.32 E-11 |
| A22 | 0.00E+00 | 0.00E+00 | 6.47 E-06 | -7.40 E-03 | 9.40 E-03 | -6.36 E-04 | -6.56 E-05 | 2.57 E-07 | 1.31 E-07 | 2.22 E-09 | 1.29 E-09 | -5.03 E-11 | -1.17 E-12 | -1.07 E-12 |
| A24 | 0.00E+00 | 0.00E+00 | 6.46 E-06 | 1.40 E-03 | -1.75 E-03 | 1.03 E-04 | 7.17 E-06 | -1.18 E-09 | -6.65 E-09 | 3.43 E-11 | -3.46 E-11 | 3.79 E-13 | 1.37 E-14 | 1.28 E-14 |
| A26 | 0.00E+00 | 0.00E+00 | -1.47 E-06 | -1.75 E-04 | 2.16 E-04 | -1.11 E-05 | -5.16 E-07 | -1.49 E-09 | 1.78 E-10 | -5.37 E-12 | 6.09 E-13 | 7.55 E-15 | -1.08 E-16 | -1.01 E-16 |
| A28 | 0.0 | 0.0 | 1.42 | 1.30 | – | 7.18 | 2.20 | 1.16 | – | 1.77 | – | – | 5.09 | 4.79 |

| Lens | L1 | | L2 | | L3 | | L4 | | L5 | | L6 | | L7 | |
|---|---|---|---|---|---|---|---|---|---|---|---|---|---|---|
| | Surface number | | Surface number | | Surface number | | Surface number | | Surface number | | Surface number | | Surface number | |
| Parameter | S1 | S2 | S1 | S2 | S1 | S2 | S1 | S2 | S1 | S2 | S1 | S2 | S1 | S2 |
| | 0E+00 | 0E+00 | E–07 | E–05 | 1.59 E–05 | E–07 | E–08 | E–10 | 1.22 E–12 | E–13 | 6.37 E–15 | 2.09 E–16 | E–19 | E–19 |
| A30 | 0.00E+00 | 0.00E+00 | –5.43 E–09 | –4.32 E–07 | 5.29 E–07 | –2.09 E–08 | –4.18 E–10 | –2.97 E–12 | –2.91 E–14 | –2.09 E–15 | 3.00 E–17 | 1.53 E–18 | –1.10 E–21 | –1.03 E–21 |

It may be learned from Table 1A that the lens module 400 in this example has a large target surface and a relatively low height. Table 1B lists curvature radiuses, thicknesses, focal lengths, refractive indexes, and Abbe coefficients of a to-be-photographed object or person (surface number column in Table 1B - object surface), the stop 1, each lens, and a sensing element (surface number column in Table 1B - image plane) in the lens module 400 in this example. Table 1C shows conic coefficients and aspheric coefficients (for example, A2 represents a quadratic aspheric coefficient) of the seven lenses in the optical system 10 in this example on the object side surface S1 and the image side surface S2. It may be learned from Table 1C that the first lens L1 to the seventh lens L7 include a total of 14 aspheric surfaces.

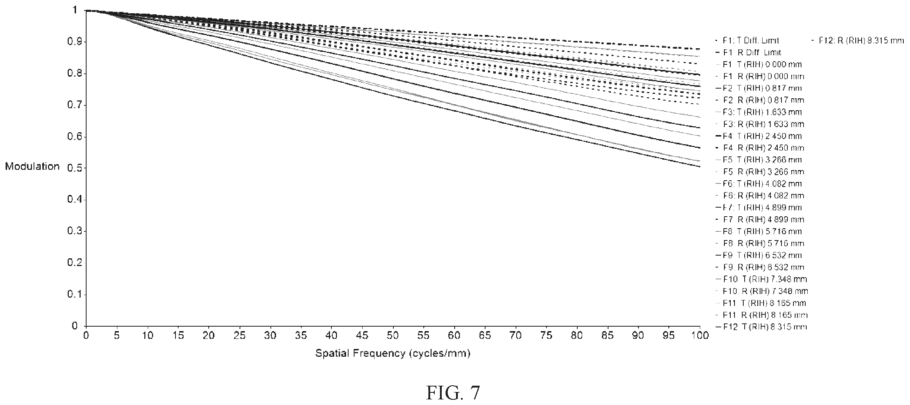

FIG. 7 is a line graph of a diffraction modulation transfer function of the lens module 400 in this example. The line graph of the diffraction modulation transfer function reflects imaging resolution of the lens module 400 in this example at different spatial frequencies. A horizontal coordinate in FIG. 7 is a spatial frequency (spatial frequency). A vertical coordinate is a diffraction modulation transfer function value (modulation). A plurality of solid lines in FIG. 7 represent variation of the diffraction modulation transfer function with the spatial frequency in a meridian direction at different field of views. A plurality of dashed lines in FIG. 7 represent variation of the diffraction modulation transfer function with the spatial frequency in a sagittal direction at different field of views. Therefore, it may be learned from FIG. 7 that the lens module 400 in this example can implement high-quality imaging.

**Example 2**

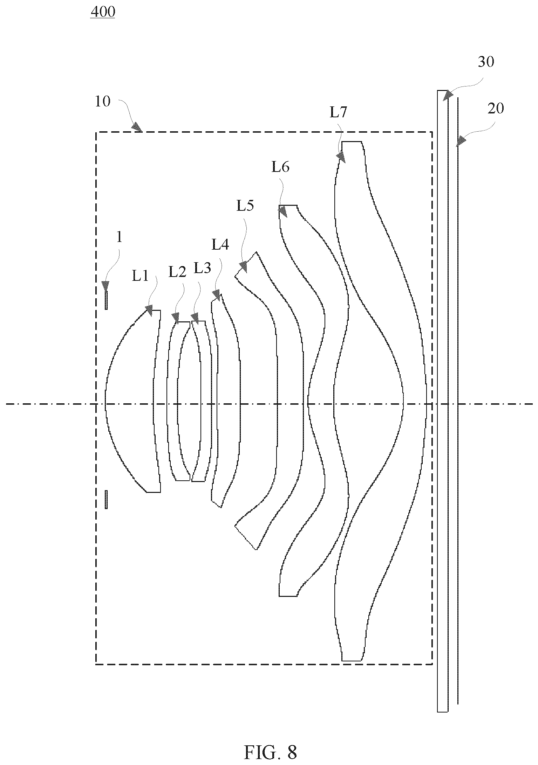

As shown in FIG. 8, composition of optical elements in a lens module 400 in this example is similar to that in Example 1, and a difference lies in that the fifth lens L5 has negative focal power, and near the optical axis, an object side surface S1 is a concave surface, and an image side surface S2 is a concave surface. The fifth lens L5 may correct an aberration of emergent light of the fourth lens L4, thereby improving optical quality of the optical system 10. In addition, the lens module 400 in this example satisfies the following conditions: $SAG_{72}/CT_7$=-2.8, $SP_6/(CT_6+CT_7)$=1.43, $(2{\times}IM\text{-}H/TTL)^2/FNO$=1.76, $CT_1/(CT_2+CT_3)$=2.33, $f_{23}/f_1$=-2.22, $(CT_3+CT_4)/(ET_3+ET_4)$=1.57, $AB_1/AB_2$=4.15, and $f{\times}\tan(HFOV)$ =8.12 mm.

Therefore, the lens module 400 may have physical parameters in Table 2A, Table 2B, and Table 2C below.

Table 2A Optical parameters of the lens module in Example 2

| Optical parameter | Value |
|---|---|
| Focal length f/mm | 8.28 |
| F-number F# | 1.66 |
| Maximum half-image height IMH of the photosensitive element/mm | 8.32 |
| Half field of view HFOV/degree | 44.4 |
| Total track length TTL/mm | 9.72 |

Table 2B Physical parameters of elements in the lens module in Example 2

| Lens | Surface number | Curvature radius | Center thickness | Focal length | Refractive index | Abbe coefficient |
|---|---|---|---|---|---|---|
| | Object surface | Unlimited | Unlimited | | | |
| | Stop | Unlimited | -0.100 | | | |
| L1 | S1 | 3.173 | 1.340 | 9.07 | 1.50 | 83.10 |
| | S2 | 9.176 | 0.370 | | | |
| L2 | S1 | 12.210 | 0.293 | -61.56 | 1.67 | 20.04 |
| | S2 | 9.322 | 0.656 | | | |
| L3 | S1 | -40.873 | 0.281 | -29.96 | 1.68 | 19.25 |
| | S2 | 40.328 | 0.141 | | | |
| L4 | S1 | 10.827 | 0.642 | 23.88 | 1.55 | 56.14 |
| | S2 | 62.517 | 1.030 | | | |
| L5 | S1 | -60.000 | 0.713 | -13.38 | 1.58 | 37.33 |
| | S2 | 8.864 | 0.138 | | | |
| L6 | S1 | 2.217 | 0.697 | 6.68 | 1.55 | 51.31 |
| | S2 | 4.950 | 1.923 | | | |
| L7 | S1 | -2.267 | 0.646 | -8.27 | 1.55 | 54.87 |
| | S2 | -5.002 | 0.286 | | | |
| IR | S1 | Unlimited | 0.300 | Unlimited | 1.52 | 64.17 |
| | S2 | Unlimited | 0.264 | | | |
| | Image plane | Unlimited | 0.000 | | | |

Table 2C Conic coefficients and aspheric coefficients of lenses in Example 2

| Lens / Parameter | L1 Surface number S1 | L1 S2 | L2 Surface number S1 | L2 S2 | L3 Surface number S1 | L3 S2 | L4 Surface number S1 | L4 S2 | L5 Surface number S1 | L5 S2 | L6 Surface number S1 | L6 S2 | L7 Surface number S1 | L7 S2 |
|---|---|---|---|---|---|---|---|---|---|---|---|---|---|---|
| Conic coefficient K | −2.63E−02 | −9.68E−01 | 3.98E+00 | 3.22E+00 | −1.76E+01 | −8.82E+01 | 7.65E+00 | −8.94E+01 | 9.80E+01 | −1.92E−01 | −1.00E+00 | −9.71E−01 | 9.99E−01 | 9.60E−01 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | −1.72E−04 | −2.61E−03 | 7.82E−03 | 4.30E−03 | 4.30E−03 | 2.94E−03 | 1.31E−02 | 7.00E−03 | −9.27E−03 | 5.78E−02 | 5.07E−02 | 2.43E−02 | 4.41E−02 | 4.47E−02 |
| A6 | 3.90E−04 | −8.05E−04 | 3.91E−03 | 9.33E−03 | 1.25E−03 | −3.35E−02 | −1.81E−02 | −4.27E−03 | −6.48E−03 | 2.21E−02 | 1.37E−02 | −1.95E−02 | −1.74E−02 | −1.56E−02 |
| A8 | −2.97E−04 | 7.78E−04 | −4.17E−03 | −3.42E−02 | −2.64E−02 | 7.30E−02 | 3.40E−02 | 2.71E−03 | 2.86E−03 | −5.59E−03 | −4.87E−03 | 6.44E−03 | 3.83E−03 | 3.03E−03 |
| A10 | 1.4 | − | 1.31 | 8.94 | 8.08 | − | − | − | − | 7.62 | 1.49 | − | − | − |

| Parameter \ Lens | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 |
|---|---|---|---|---|---|---|---|---|---|---|---|---|---|---|
| | 5E-04 | 5.70E-04 | E-03 | E-02 | E-02 | 1.02E-01 | 3.92E-02 | 1.05E-03 | 7.06E-04 | E-04 | E-03 | 1.37E-03 | 4.99E-04 | 3.80E-04 |
| A12 | -4.95E-05 | 2.66E-04 | 5.20E-03 | -1.51E-01 | -1.39E-01 | 9.73E-02 | 3.11E-02 | -1.69E-05 | -1.48E-04 | -1.39E-05 | -3.41E-04 | 1.97E-04 | 4.26E-05 | 3.28E-05 |
| A14 | 1.17E-05 | -7.78E-05 | -9.41E-03 | 1.72E-01 | 1.54E-01 | -6.69E-02 | -1.76E-02 | 2.90E-04 | 1.74E-04 | -1.99E-05 | 5.37E-05 | -1.95E-05 | 2.53E-06 | 2.02E-06 |
| A16 | -1.92E-06 | 1.39E-05 | 8.45E-03 | -1.37E-01 | -1.18E-01 | 3.38E-02 | 7.17E-03 | -1.81E-04 | 6.36E-05 | 5.52E-06 | -5.84E-06 | 1.34E-06 | 1.09E-07 | 8.97E-08 |
| A18 | 1.93E-07 | -1.38E-06 | -4.83E-03 | 7.75E-02 | 6.34E-02 | -1.27E-02 | -2.13E-03 | 6.17E-05 | 1.36E-05 | -8.93E-07 | 4.43E-07 | -6.25E-08 | 3.43E-09 | 2.91E-09 |
| A20 | -8.87E-09 | 5.78E-08 | 1.87E-03 | -3.13E-02 | -2.44E-02 | 3.53E-03 | 4.61E-04 | -1.36E-05 | 1.88E-06 | -1.00E-07 | -2.37E-08 | 1.81E-09 | 7.94E-11 | 6.89E-11 |
| A22 | 0.00E+00 | 0.00E+00 | -4.97E-04 | 8.94E-03 | 6.65E-03 | -7.22E-04 | -7.14E-05 | 2.01E-06 | 1.71E-07 | -7.90E-09 | 8.95E-10 | -2.20E-11 | 1.34E-12 | 1.17E-12 |
| A24 | 0.00E+00 | 0.00E+00 | 8.98E-05 | -1.77E-03 | -1.26E-03 | 1.05E-04 | 7.69E-06 | -1.98E-07 | 1.00E-08 | -4.30E-10 | -2.33E-11 | -4.57E-13 | 1.60E-14 | 1.40E-14 |

| Parameter \ Lens | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 |
|---|---|---|---|---|---|---|---|---|---|---|---|---|---|---|
| | 0 | | | | | | | | | | | | | |
| A26 | 0.00E+00 | 0.00E+00 | −1.05E−05 | 2.30E−04 | 1.57E−04 | −1.04E−05 | −5.46E−07 | 1.25E−08 | 3.53E−10 | −1.52E−11 | 4.00E−13 | 2.38E−14 | −1.29E−16 | −1.11E−16 |
| A28 | 0.00E+00 | 0.00E+00 | 7.21E−07 | −1.77E−05 | −1.17E−05 | 6.20E−07 | 2.29E−08 | −4.56E−10 | −6.35E−12 | 3.15E−13 | −4.06E−15 | −3.95E−16 | 6.25E−19 | 5.25E−19 |
| A30 | 0.00E+00 | 0.00E+00 | −2.19E−08 | 6.10E−07 | 3.89E−07 | −1.69E−08 | −4.31E−10 | 7.30E−12 | 3.68E−14 | −2.89E−15 | 1.85E−17 | 2.48E−18 | −1.38E−21 | −1.12E−21 |

It may be learned from Table 2A that the lens module 400 in this example has a large target surface and a relatively low height. Table 2B lists curvature radiuses, thicknesses, focal lengths, refractive indexes, and Abbe coefficients of a to-be-photographed object or person (surface number column in Table 2B → object surface), the stop 1, each lens, and a sensing element (surface number column in Table 2B → image plane) in the lens module 400 in this example. Table 2C shows conic coefficients and aspheric coefficients of the seven lenses in the optical system 10 in this example on the object side surface S1 and the image side surface S2. It may be learned from Table 2C that the first lens L1 to the seventh lens L7 include a total of 14 aspheric surfaces.

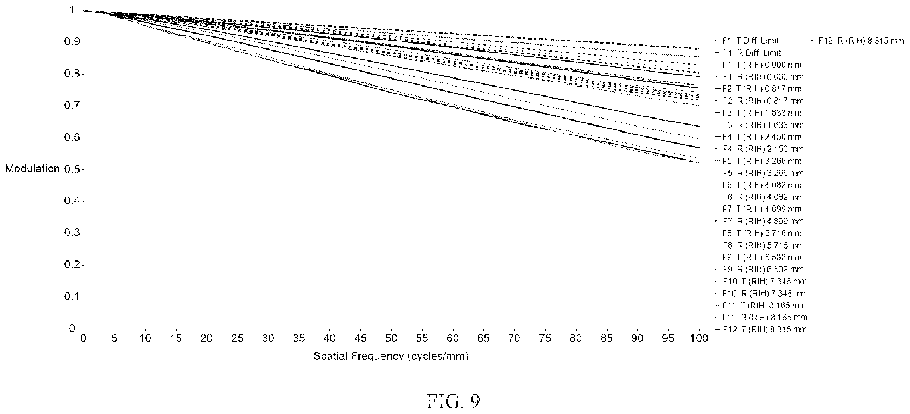

In addition, FIG. 9 is a line graph of a diffraction modulation transfer function of the lens module 400 in this example. It may be learned from FIG. 9 that the lens module 400 in this example can implement high-quality imaging.

**Example 3**

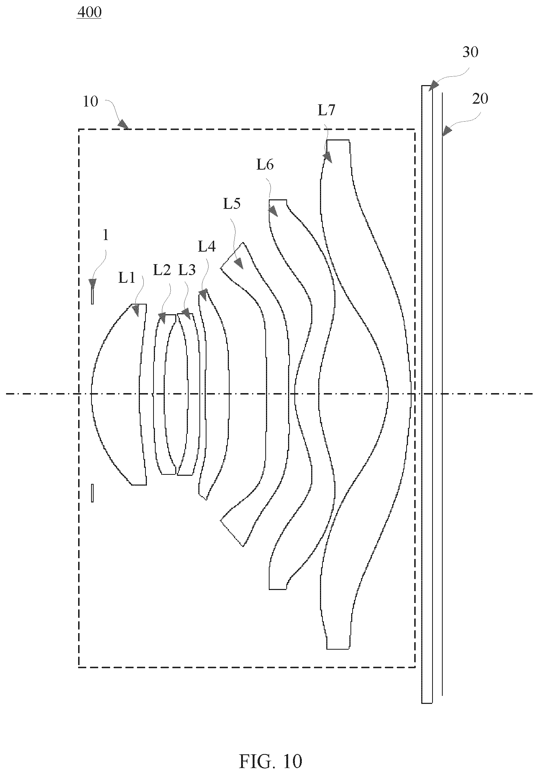

As shown in FIG. 10, composition of optical elements in a lens module 400 in this example is similar to that in Example 1, and a difference lies in that the fourth lens L4 has positive focal power, and near the optical axis, an object side surface S1 is a convex surface, and an image side surface S2 is a convex surface. The fourth lens L4 may converge emergent light of the third lens L3, thereby reducing a height of the lens module 400. The fifth lens L5 has negative focal power; and near the optical axis, an object side surface S1 is a concave surface, and an image side surface S2 is a concave surface. The fifth lens L5 may balance an aberration of the optical system 10, thereby improving imaging quality of the optical system 10. In addition, the lens module 400 in this example satisfies the following conditions: $SAG_{72}/CT_7=-2.69$, $SP_6/(CT_6+CT_7)=1.48$, $(2\times IMH/TTL)^2/FNO=1.77$, $CT_1/(CT_2+CT_3)=2.13$, $f_{23}/f_1=-2.12$, $(CT_3+CT_4)/(ET_3+ET_4)=1.64$, $AB_1/AB_2=4.06$, and $f\times\tan(HFOV)=8.09$ mm.

Therefore, the lens module 400 may have physical parameters in Table 3A, Table 3B, and Table 3C below.

Table 3A Optical parameters of the lens module in Example 3

| Optical parameter | Value |
|---|---|
| Focal length f/mm | 8.31 |
| F-number F# | 1.66 |

(continued)

| Optical parameter | Value |
|---|---|
| Maximum half-image height IMH of the photosensitive element/mm | 8.32 |
| Half field of view HFOV/degree | 44.2 |
| Total track length TTL/mm | 9.71 |

Table 3B Physical parameters of elements in the lens module in Example 3

| Lens | Surface number | Curvature radius | Center thickness | Focal length | Refractive index | Abbe coefficient |
|---|---|---|---|---|---|---|
| | Object surface | Unlimited | Unlimited | | | |
| | Stop | Unlimited | -0.100 | | | |
| L1 | S1 | 3.199 | 1.339 | 9.06 | 1.50 | 81.56 |
| | S2 | 9.448 | 0.380 | | | |
| L2 | S1 | 13.764 | 0.306 | -55.92 | 1.67 | 20.08 |
| | S2 | 9.963 | 0.655 | | | |
| L3 | S1 | -34.806 | 0.323 | -29.48 | 1.68 | 19.25 |
| | S2 | 46.890 | 0.152 | | | |
| L4 | S1 | 11.886 | 0.658 | 18.66 | 1.55 | 56.14 |
| | S2 | -69.712 | 1.028 | | | |
| L5 | S1 | -76.642 | 0.616 | -12.03 | 1.58 | 33.96 |
| | S2 | 7.763 | 0.176 | | | |
| L6 | S1 | 2.176 | 0.660 | 6.83 | 1.55 | 51.49 |
| | S2 | 4.616 | 1.920 | | | |
| L7 | S1 | -2.287 | 0.641 | -8.17 | 1.56 | 44.25 |
| | S2 | -5.020 | 0.286 | | | |
| IR | S1 | Unlimited | 0.300 | Unlimited | 1.52 | 64.17 |
| | S2 | Unlimited | 0.264 | | | |
| | Image plane | Unlimited | 0.000 | | | |

Table 3C Conic coefficients and aspheric coefficients of lenses in Example 3

| Parameter \ Lens | L1 | | L2 | | L3 | | L4 | | L5 | | L6 | | L7 | |
|---|---|---|---|---|---|---|---|---|---|---|---|---|---|---|
| | Surface number | | Surface number | | Surface number | | Surface number | | Surface number | | Surface number | | Surface number | |
| | S1 | S2 | S1 | S2 | S1 | S2 | S1 | S2 | S1 | S2 | S1 | S2 | S1 | S2 |
| Conic coefficient K | −3.39E−02 | −1.12E+00 | 4.54E+00 | 3.02E+00 | −2.42E+01 | −9.54E+01 | 8.09E+00 | −9.80E+01 | 9.80E+01 | 8.90E−02 | −1.00E+00 | −9.92E−01 | −9.99E−01 | −9.99E−01 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | −1.06E−04 | −1.71E−03 | −1.06E−02 | −5.59E−03 | −1.80E−02 | 5.31E−03 | −1.27E−02 | −7.22E−03 | 9.06E−03 | −5.98E−02 | −4.76E−02 | 2.45E−02 | 4.07E−02 | 4.18E−02 |
| A6 | 5.00E− | −4.96E− | 2.35E−02 | 7.86E−03 | 9.87E−02 | −7.98E−02 | −3.12E−02 | −6.21E−03 | −1.14E−02 | 2.58E−02 | 1.10E−02 | −2.06E−02 | −1.59E−02 | −1.45E−02 |

| | L1 | | L2 | | L3 | | L4 | | L5 | | L6 | | L7 | |
|---|---|---|---|---|---|---|---|---|---|---|---|---|---|---|
| Lens | Surface number | | Surface number | | Surface number | | Surface number | | Surface number | | Surface number | | Surface number | |
| Parameter | S1 | S2 | S1 | S2 | S1 | S2 | S1 | S2 | S1 | S2 | S1 | S2 | S1 | S2 |
| | 04 | 03 | | | | | | | | | | | | |
| A8 | −4.03E−04 | 6.96E−03 | 5.69E−02 | 4.94E−03 | 3.66E−01 | 2.01E−01 | 6.98E−02 | 1.02E−02 | 1.16E−02 | −8.97E−03 | −3.61E−03 | 7.31E−03 | 3.51E−03 | 2.78E−03 |
| A10 | 1.51E−04 | −5.30E−03 | 7.81E−02 | −8.09E−03 | 7.94E−01 | −3.17E−01 | 8.79E−02 | 1.16E−02 | 8.66E−03 | 2.63E−03 | 1.11E−03 | −1.72E−03 | 4.58E−04 | 3.45E−04 |
| A12 | −3.15E−05 | 2.32E−03 | −6.29E−02 | 2.58E−02 | −1.12E+00 | 3.42E−01 | 7.27E−02 | 8.66E−03 | 4.38E−03 | −6.76E−04 | −2.62E−04 | 2.82E−04 | 3.91E−05 | 2.93E−05 |
| A14 | 4.47E−06 | −5.99E−04 | 2.81E−02 | −3.50E−02 | 1.09E+00 | −2.63E−01 | 4.18E−02 | 4.42E−03 | 1.55E−03 | 1.40E−04 | 4.26E−05 | −3.31E−05 | 2.32E−06 | 1.77E−06 |
| A16 | −6.83E−07 | 9.05E−05 | −3.61E−03 | 3.07E−02 | −7.48E−01 | 1.46E−01 | 1.71E−02 | 1.59E−03 | 3.92E−04 | −2.18E−05 | −4.73E−06 | 2.85E−06 | 9.94E−08 | 7.73E−08 |
| A18 | 8.87E−08 | −7.39E−06 | −3.50E−03 | −1.89E−02 | 3.70E−01 | −5.95E−02 | 5.07E−03 | 4.09E−04 | 7.15E−05 | −2.45E−06 | −3.64E−07 | 1.81E−07 | 3.11E−09 | 2.46E−09 |
| A20 | −5.2 | 2.51E− | 2.49E−03 | 8.34E−03 | −1.32 | 1.77E−02 | 1.09E−03 | 7.55E−05 | 9.45E−06 | −1.94 | −1.98 | 8.44E−09 | 7.16E−11 | 5.72E−11 |

| Parameter \ Lens | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 |
|---|---|---|---|---|---|---|---|---|---|---|---|---|---|---|
|  | 6E−09 | 07 |  |  | E−01 |  |  |  |  | E−07 | E−08 |  |  |  |
| A22 | 0.00E+00 | 0.00E+00 | −8.32E−04 | −2.61E−03 | 3.38E−02 | −3.81E−03 | −1.66E−04 | −9.93E−06 | −8.96E−07 | 1.05E−08 | 7.56E−10 | −2.86E−10 | −1.20E−12 | −9.56E−13 |
| A24 | 0.00E+00 | 0.00E+00 | 1.68E−04 | 5.62E−04 | −6.03E−03 | 5.76E−04 | 1.77E−05 | 9.08E−07 | 5.93E−08 | −3.79E−10 | −1.99E−11 | 6.80E−12 | 1.41E−14 | 1.12E−14 |
| A26 | 0.00E+00 | 0.00E+00 | −2.09E−05 | −7.93E−05 | 7.13E−04 | −5.80E−05 | −1.25E−06 | −5.47E−08 | −2.61E−09 | 8.28E−12 | 3.47E−13 | −1.07E−13 | −1.12E−16 | −8.74E−17 |
| A28 | 0.00E+00 | 0.00E+00 | 1.48E−06 | 6.57E−06 | −5.02E−05 | 3.49E−06 | 5.20E−08 | 1.96E−09 | 6.82E−11 | −9.27E−14 | −3.58E−15 | 1.01E−15 | 5.35E−19 | 4.07E−19 |
| A30 | 0.00E+00 | 0.00E+00 | −4.57E−08 | −2.42E−07 | 1.59E−06 | −9.47E−08 | −9.72E−10 | −3.14E−11 | −8.05E−13 | 3.13E−16 | 1.66E−17 | −4.24E−18 | −1.16E−21 | −8.55E−22 |

It may be learned from Table 3A that the lens module 400 in this example has a large target surface and a relatively low height. Table 3B lists curvature radiuses, thicknesses, focal lengths, refractive indexes, and Abbe coefficients of a to-be-photographed object or person (surface number column in Table 3B → object surface), the stop 1, each lens, and a sensing element (surface number column in Table 3B → image plane) in the lens module 400 in this example. Table 3C shows conic coefficients and aspheric coefficients of the seven lenses in the optical system 10 in this example on the object side surface S1 and the image side surface S2. It may be learned from Table 3C that the first lens L1 to the seventh lens L7 include a total of 14 aspheric surfaces.

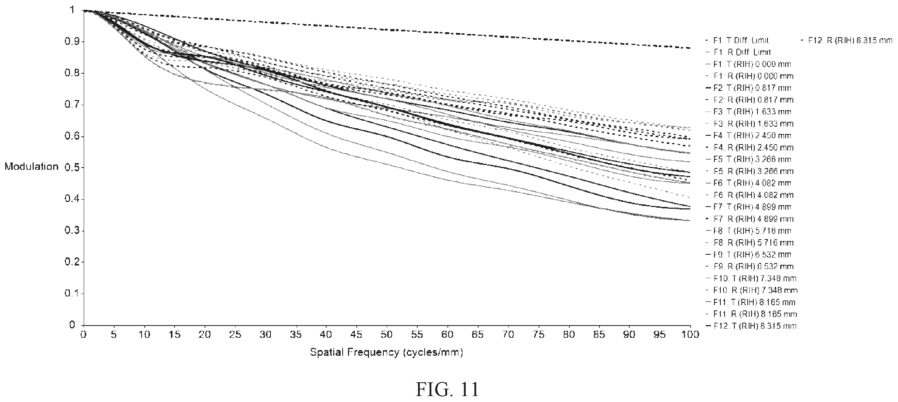

In addition, FIG. 11 is a line graph of a diffraction modulation transfer function of the lens module 400 in this example. It may be learned from FIG. 11 that the lens module 400 in this example can implement high-quality imaging.

**Example 4**

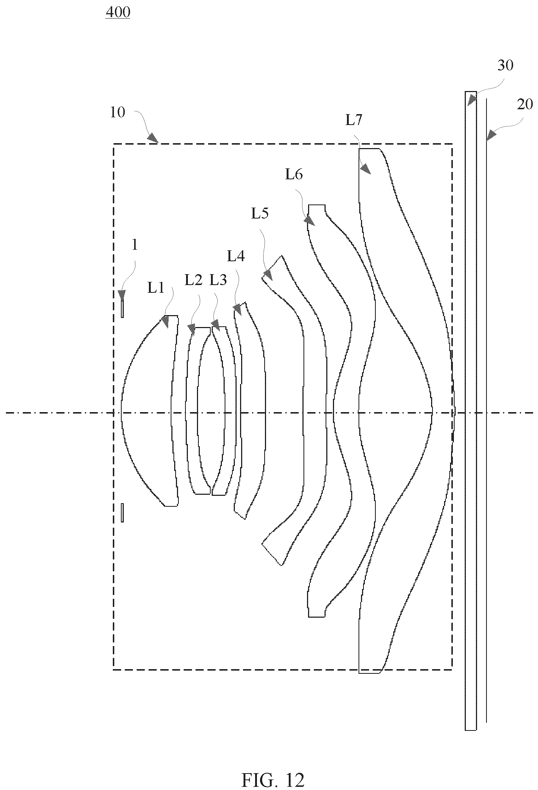

As shown in FIG. 12, composition of optical elements in a lens module 400 in this example is similar to that in Example 1, and a difference lies in that the third lens L3 has negative focal power, and near the optical axis, an object side surface S1 is a concave surface, and an image side surface S2 is a convex surface. The third lens L3 may balance an aberration of the optical system 10, thereby improving imaging quality of the optical system 10. In addition, the lens module 400 in this example satisfies the following conditions: $SAG_{72}/CT_7$=-3.32, $SP_6/(CT_6+CT_7)$=1.52, $(2\times IM\text{-}H/TTL)^2/FNO$=1.76, $CT_1/(CT_2+CT_3)$=2.2, $f_{23}/f_1$=-2.22, $(CT_3+CT_4)/(ET_3+ET_4)$=1.55, $AB_1/AB_2$=4.15, and $f\times tan(HFOV)$ =8.1 mm.

Therefore, the lens module 400 may have physical parameters in Table 4A, Table 4B, and Table 4C below.

Table 4A Optical parameters of the lens module in Example 4

| Optical parameter | Value |
|---|---|
| Focal length f/mm | 8.3 |
| F-number F# | 1.64 |
| Maximum half-image height IMH of the photosensitive element/mm | 8.32 |
| Half field of view HFOV/degree | 44.3 |
| Total track length TTL/mm | 9.78 |

Table 4B Physical parameters of elements in the lens module in Example 4

| Lens | Surface number | Curvature radius | Center thickness | Focal length | Refractive index | Abbe coefficient |
|---|---|---|---|---|---|---|
| | Object surface | Unlimited | Unlimited | | | |
| | Stop | Unlimited | -0.100 | | | |
| L1 | S1 | 3.234 | 1.333 | 9.03 | 1.50 | 79.90 |
| | S2 | 9.867 | 0.399 | | | |
| L2 | S1 | 13.760 | 0.301 | -53.94 | 1.68 | 19.25 |
| | S2 | 9.904 | 0.739 | | | |
| L3 | S1 | -15.139 | 0.305 | -32.03 | 1.68 | 19.25 |
| | S2 | -50.613 | 0.115 | | | |
| L4 | S1 | 12.182 | 0.660 | 25.08 | 1.55 | 56.14 |
| | S2 | 108.444 | 1.023 | | | |
| L5 | S1 | 125.318 | 0.606 | -14.17 | 1.58 | 36.21 |
| | S2 | 7.674 | 0.187 | | | |
| L6 | S1 | 2.192 | 0.685 | 6.80 | 1.55 | 51.41 |
| | S2 | 4.693 | 1.968 | | | |
| L7 | S1 | -2.303 | 0.611 | -7.89 | 1.56 | 47.97 |
| | S2 | -5.308 | 0.286 | | | |
| IR | S1 | Unlimited | 0.300 | Unlimited | 1.52 | 64.17 |
| | S2 | Unlimited | 0.264 | | | |
| | Image plane | Unlimited | 0.000 | | | |

Table 4C Conic coefficients and aspheric coefficients of lenses in Example 4

| Lens | L1 | | L2 | | L3 | | L4 | | L5 | | L6 | | L7 | |
|---|---|---|---|---|---|---|---|---|---|---|---|---|---|---|
| | Surface number | | Surface number | | Surface number | | Surface number | | Surface number | | Surface number | | Surface number | |
| Parameter | S1 | S2 | S1 | S2 | S1 | S2 | S1 | S2 | S1 | S2 | S1 | S2 | S1 | S2 |
| Conic coefficient K | −2.94E−02 | −1.08E+00 | 3.92E+00 | 3.07E+00 | −1.77E+01 | −9.80E+01 | 8.46E+00 | −9.80E+01 | 9.80E+01 | −1.79E−01 | −1.00E+00 | −1.00E+00 | −9.93E−01 | −8.33E−01 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | −1.37E− | −3.26E− | −9.09E−03 | −1.51E−03 | −6.95E−03 | −9.34E−03 | −1.58E−02 | −5.87E−03 | 6.18E−03 | −5.44E−02 | −4.47E−02 | 2.37E−02 | 4.19E−02 | 4.10E−02 |

| Lens / Parameter | L1 Surface number | | L2 Surface number | | L3 Surface number | | L4 Surface number | | L5 Surface number | | L6 Surface number | | L7 Surface number | |
|---|---|---|---|---|---|---|---|---|---|---|---|---|---|---|
| | S1 | S2 | S1 | S2 | S1 | S2 | S1 | S2 | S1 | S2 | S1 | S2 | S1 | S2 |
| | 04 | 03 | | | | | | | | | | | | |
| A6 | 4.83E−04 | 7.56E−04 | 1.45E−02 | −1.36E−02 | 1.66E−02 | −4.17E−03 | −4.69E−03 | −4.15E−03 | −3.26E−03 | 1.81E−02 | 7.90E−03 | −1.97E−02 | 1.55E−02 | 1.39E−02 |
| A8 | −4.14E−04 | −9.65E−04 | −4.36E−02 | 5.55E−02 | −6.01E−02 | 1.65E−02 | 1.13E−02 | 2.32E−03 | 6.81E−04 | −2.82E−03 | −1.64E−03 | 6.91E−03 | 3.27E−03 | 2.63E−03 |
| A10 | 1.96E−04 | 6.70E−04 | 8.33E−02 | −1.21E−01 | 1.26E−01 | −3.22E−02 | −1.41E−02 | −1.13E−03 | 4.22E−04 | −3.21E−04 | 3.92E−04 | −1.60E−03 | −4.08E−04 | −3.24E−04 |
| A12 | −5.26E−05 | −2.99E−04 | −1.03E−01 | 1.70E−01 | −1.76E−01 | 3.94E−02 | 1.16E−02 | 4.82E−04 | −5.22E−04 | 2.48E−04 | −9.62E−05 | 2.58E−04 | 3.35E−05 | 2.76E−05 |
| A14 | 7.50E−06 | 8.52E−05 | 8.76E−02 | −1.61E−01 | 1.72E−01 | −3.34E−02 | 6.64E−03 | 1.89E−04 | 2.40E−04 | −6.05E−05 | 1.70E−05 | −2.95E−05 | 1.92E−06 | 1.67E−06 |
| A16 | −4.97E−07 | −1.46E−05 | −5.29E−02 | 1.07E−01 | −1.20E−01 | 2.02E−02 | 2.74E−03 | 7.07E−05 | −6.48E−05 | 9.36E−06 | −1.98E−06 | 2.46E−06 | 8.01E−08 | 7.36E−08 |
| A18 | 6.54E−09 | 1.36E−06 | 2.30E−02 | −5.12E−02 | 6.00E−02 | −8.86E−03 | 8.21E−04 | 2.27E−05 | 1.14E−05 | −1.05E−06 | 1.56E−07 | −1.50E−07 | 2.47E−09 | 2.37E−09 |
| A20 | 1.86E−10 | −5.29E−08 | 7.23E−03 | −1.76E−02 | −2.18E−02 | 2.81E−03 | 1.79E−04 | 5.51E−06 | −1.34E−06 | 8.96E−08 | −8.44E−09 | 6.74E−09 | 5.67E−11 | 5.55E−11 |
| A22 | 0.00 | 0.0 | 1.63 | − | 5.69 | − | − | − | 1.05 | − | 3.17 | − | − | − |

| Lens | L1 | | L2 | | L3 | | L4 | | L5 | | L6 | | L7 | |
|---|---|---|---|---|---|---|---|---|---|---|---|---|---|---|
| Parameter | Surface number | | Surface number | | Surface number | | Surface number | | Surface number | | Surface number | | Surface number | |
| | S1 | S2 | S1 | S2 | S1 | S2 | S1 | S2 | S1 | S2 | S1 | S2 | S1 | S2 |
| | E+00 | 0E+00 | E−03 | 4.34E−03 | E−03 | 6.37E−04 | 2.80E−05 | 9.47E−07 | E−07 | 5.81E−09 | E−10 | 2.18E−10 | 9.57E−13 | 9.36E−13 |
| A24 | 0.00E+00 | 0.00E+00 | −2.55E−04 | 7.47E−04 | −1.04E−03 | 1.01E−04 | 3.03E−06 | 1.10E−07 | −5.12E−09 | 2.76E−10 | −8.14E−12 | 4.96E−12 | 1.16E−14 | 1.11E−14 |
| A26 | 0.00E+00 | 0.00E+00 | 2.63E−05 | −8.50E−05 | 1.25E−04 | −1.05E−05 | −2.16E−07 | −8.28E−09 | 1.38E−10 | −8.91E−12 | 1.37E−13 | −7.49E−14 | 9.48E−17 | 8.69E−17 |
| A28 | 0.00E+00 | 0.00E+00 | −1.61E−06 | 5.75E−06 | −8.97E−06 | 6.55E−07 | 9.09E−09 | 3.60E−10 | −1.33E−12 | 1.73E−13 | −1.35E−15 | 6.72E−16 | 4.71E−19 | 4.07E−19 |
| A30 | 0.00E+00 | 0.00E+00 | 4.43E−08 | −1.74E−07 | 2.90E−07 | −1.84E−08 | −1.71E−10 | −6.87E−12 | 1.03E−14 | 1.51E−15 | 5.98E−18 | −2.70E−18 | −1.07E−21 | −8.57E−22 |

It may be learned from Table 4A that the lens module 400 in this example has a large target surface and a relatively low height. Table 4B lists curvature radiuses, thicknesses, focal lengths, refractive indexes, and Abbe coefficients of a to-be-photographed object or person (surface number column in Table 4B → object surface), the stop 1, each lens, and a sensing element (surface number column in Table 4B → image plane) in the lens module 400 in this example. Table 4C shows conic coefficients and aspheric coefficients of the seven lenses in the optical system 10 in this example on the object side surface S1 and the image side surface S2. It may be learned from Table 4C that the first lens L1 to the seventh lens L7 include a total of 14 aspheric surfaces.

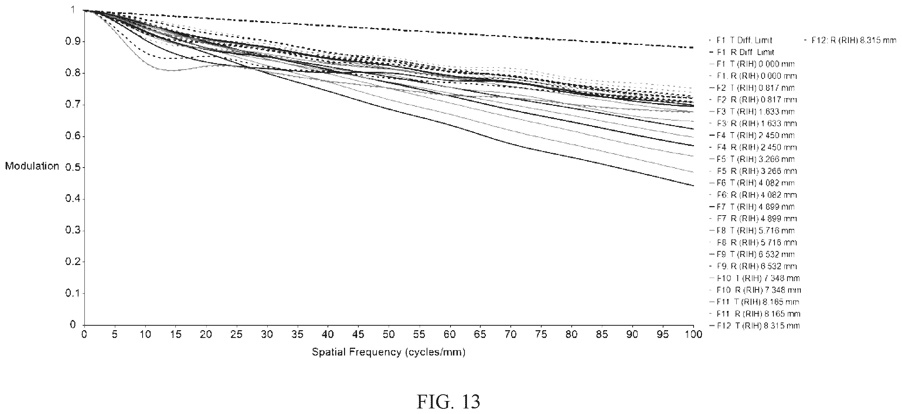

In addition, FIG. 13 is a line graph of a diffraction modulation transfer function of the lens module 400 in this example. It may be learned from FIG. 13 that the lens module 400 in this example can implement high-quality imaging.

**Example 5**

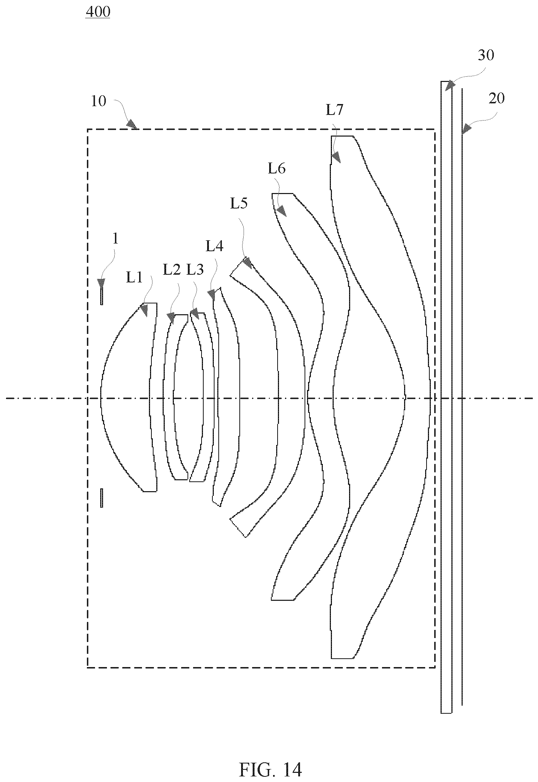

As shown in FIG. 14, composition of optical elements in a lens module 400 in this example is similar to that in Example 1, and a difference lies in that the third lens L3 has negative focal power, and near the optical axis, an object side surface S1 is a concave surface, and an image side surface S2 is a convex surface. The third lens L3 may balance an aberration of the optical system 10, thereby improving imaging quality of the optical system 10. The fifth lens L5 has negative focal power; and near the optical axis, an object side surface S1 is a concave surface, and an image side surface S2 is a convex surface. The fifth lens L5 may balance an aberration of the optical system 10, thereby improving the imaging quality of the optical system 10. In addition, the lens module 400 in this example satisfies the following conditions: $SAG_{72}/CT_7=3.11$, $SP_6/(CT_6+CT_7)=1.43$, $(2\times IMH/TTL)^2/FNO=1.77$, $CT_1/(CT_2+CT_3)=2.37$, $f_{23}/f_1=2.21$, $(CT_3+CT_4)/(ET_3+ET_4)=1.59$, $AB_1/AB_2=4.32$, and $f\times tan(HFOV)=8.12$ mm.

Therefore, the lens module 400 may have physical parameters in Table 5A, Table 5B, and Table 5C below.

Table 5A Optical parameters of the lens module in Example 5

| Optical parameter | Value |
|---|---|
| Focal length f/mm | 8.28 |
| F-number F# | 1.63 |
| Maximum half-image height IMH of the photosensitive element/mm | 8.32 |
| Half field of view HFOV/degree | 44.4 |
| Total track length TTL/mm | 9.8 |

Table 5B Physical parameters of elements in the lens module in Example 5

| Lens | Surface number | Curvature radius | Center thickness | Effective focal length | Refractive index | Abbe coefficient |
|---|---|---|---|---|---|---|
| | Object surface | Unlimited | Unlimited | | | |
| | Stop | Unlimited | -0.100 | | | |
| L1 | S1 | 3.228 | 1.338 | 9.17 | 1.50 | 83.10 |
| | S2 | 9.495 | 0.369 | | | |
| L2 | S1 | 10.197 | 0.280 | -72.33 | 1.68 | 19.25 |
| | S2 | 8.345 | 0.807 | | | |
| L3 | S1 | -15.542 | 0.285 | -28.21 | 1.68 | 19.25 |
| | S2 | -84.243 | 0.103 | | | |
| L4 | S1 | 11.113 | 0.577 | 25.84 | 1.55 | 56.14 |
| | S2 | 51.414 | 1.070 | | | |
| L5 | S1 | -15.123 | 0.720 | -38.32 | 1.57 | 40.22 |
| | S2 | -50.278 | 0.071 | | | |
| L6 | S1 | 2.704 | 0.683 | 9.23 | 1.55 | 56.14 |
| | S2 | 5.315 | 1.950 | | | |
| L7 | S1 | -2.319 | 0.682 | -7. 85 | 1.55 | 56.14 |
| | S2 | -5.581 | 0.286 | | | |
| IR | S1 | Unlimited | 0.300 | Unlimited | 1.52 | 64.17 |
| | S2 | Unlimited | 0.278 | | | |
| | Image plane | Unlimited | 0.000 | | | |

Table 5C Conic coefficients and aspheric coefficients of lenses in Example 5

| Lens / Parameter | L1 Surface number | | L2 Surface number | | L3 Surface number | | L4 Surface number | | L5 Surface number | | L6 Surface number | | L7 Surface number | |
|---|---|---|---|---|---|---|---|---|---|---|---|---|---|---|
| | S1 | S2 | S1 | S2 | S1 | S2 | S1 | S2 | S1 | S2 | S1 | S2 | S1 | S2 |
| Conic coefficient K | −1.86E−02 | −7.63E−01 | 3.39E+00 | 3.06E+00 | −1.07E+01 | −9.80E+01 | 7.67E+00 | 1.22E+01 | −4.11E+01 | −9.80E+01 | −9.66E−01 | −1.02E+00 | −9.91E−01 | −7.63E−01 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | −2.90E−04 | −2.98E−03 | −7.04E−03 | −3.89E−03 | −1.14E−02 | −1.02E−02 | −1.46E−02 | −7.26E−03 | 1.20E−02 | −3.12E−02 | −2.51E−02 | 3.25E−02 | 4.77E−02 | 4.27E−02 |
| A6 | 6.56E−04 | 9.94E−04 | 2.85E−03 | 7.92E−03 | 4.67E−02 | 1.93E−02 | −7.86E−04 | −5.10E−03 | −9.96E−03 | 4.50E−03 | −1.87E−04 | −2.22E−02 | −1.54E−02 | −1.26E−02 |
| A8 | − | − | − | − | − | − | 3.51 | 7.07 | 7.04 | 3.67 | 7.31 | 6.99 | 2.84 | 2.16 |

| Parameter \ Lens | L1 Surface number S1 | L1 S2 | L2 Surface number S1 | L2 S2 | L3 Surface number S1 | L3 S2 | L4 Surface number S1 | L4 S2 | L5 Surface number S1 | L5 S2 | L6 Surface number S1 | L6 S2 | L7 Surface number S1 | L7 S2 |
|---|---|---|---|---|---|---|---|---|---|---|---|---|---|---|
| | 5.36E−04 | 1.56E−03 | 3.23E−03 | 2.95E−02 | 1.48E−01 | 4.66E−02 | E−03 | E−03 | E−03 | E−03 | E−04 | E−03 | E−03 | E−03 |
| A10 | 2.76E−04 | 1.19E−03 | 8.76E−04 | 7.44E−02 | 2.89E−01 | 6.68E−02 | −6.52E−03 | −7.47E−03 | −4.52E−03 | −2.91E−03 | −1.62E−04 | −1.47E−03 | −3.21E−04 | −2.51E−04 |
| A12 | −8.95E−05 | −5.30E−04 | 5.23E−03 | −1.20E−01 | −3.86E−01 | −6.82E−02 | 6.37E−03 | 5.32E−03 | 2.21E−03 | 1.09E−03 | 1.14E−05 | 2.18E−04 | 2.47E−05 | 2.08E−05 |
| A14 | 1.80E−05 | 1.42E−04 | −9.51E−03 | 1.32E−01 | 3.64E−01 | 5.05E−02 | −3.87E−03 | −2.63E−03 | −8.23E−04 | −2.70E−04 | 1.24E−06 | −2.35E−05 | −1.37E−06 | −1.25E−06 |
| A16 | −2.24E−06 | −2.23E−05 | 8.68E−03 | −1.02E−01 | −2.48E−01 | −2.73E−02 | 1.59E−03 | 9.28E−04 | 2.29E−04 | 4.77E−05 | −3.56E−07 | 1.85E−06 | 5.75E−08 | 5.45E−08 |
| A18 | 1.60E−07 | 1.88E−06 | −5.01E−03 | 5.58E−02 | 1.23E−01 | 1.08E−02 | −4.60E−04 | −2.37E−04 | −4.71E−05 | −6.11E−06 | 3.89E−08 | −1.08E−07 | −1.83E−09 | −1.74E−09 |
| A20 | 5.40E−09 | 6.55E−08 | 1.95E−03 | −2.18E−02 | −4.39E−02 | −3.10E−03 | 9.51E−05 | 4.38E−05 | 7.03E−06 | 5.67E−07 | −2.57E−09 | 4.56E−09 | 4.42E−11 | 4.05E−11 |
| A22 | 0.00E+00 | 0.00E+00 | −5.18E−04 | 6.06E−03 | 1.13E−02 | 6.38E−04 | −1.39E−05 | −5.80E−06 | −7.50E−07 | −3.76E−08 | 1.12E−10 | −1.39E−10 | −7.92E−13 | −6.76E−13 |
| A24 | 0.00E+00 | 0.00E+00 | 9.32E−05 | −1.16 | −2.03 | −9.16 | 1.42E−06 | 5.36E−07 | 5.53E−08 | 1.73E−09 | −3.25 | 2.92E−12 | 1.02E−14 | 7.88E−15 |

| Lens | L1 | | L2 | | L3 | | L4 | | L5 | | L6 | | L7 | |
|---|---|---|---|---|---|---|---|---|---|---|---|---|---|---|
| | Surface number | | Surface number | | Surface number | | Surface number | | Surface number | | Surface number | | Surface number | |
| Parameter | S1 | S2 | S1 | S2 | S1 | S2 | S1 | S2 | S1 | S2 | S1 | S2 | S1 | S2 |
| | +0 0 | 00 | | E–03 | E–03 | E–05 | | | | | E–12 | | | |
| A26 | 0.00E +00 | 0.00E+00 | –1.09E–05 | 1.47E–04 | 2.41E–04 | 8.69E–06 | –9.48E–08 | –3.27E–08 | –2.68E–09 | –5.26E–11 | 6.01E–14 | –4.02E–14 | 8.78E–17 | –6.09E–17 |
| A28 | 0.00E +00 | 0.00E+00 | 7.39E–07 | –1.10E–05 | –1.70E–05 | –4.90E–07 | 3.75E–09 | 1.18E–09 | 7.60E–11 | 9.41E–13 | –6.46E–16 | 3.22E–16 | 4.55E–19 | 2.79E–19 |
| A30 | 0.00E +00 | 0.00E+00 | –2.23E–08 | 3.67E–07 | 5.42E–07 | 1.24E–08 | –6.62E–11 | –1.92E–11 | –9.59E–13 | –7.52E–15 | 3.06E–18 | –1.12E–18 | 1.07E–21 | 5.77E–22 |

It may be learned from Table 5A that the lens module 400 in this example has a large target surface and a relatively low height. Table 5B lists curvature radiuses, thicknesses, focal lengths, refractive indexes, and Abbe coefficients of a to-be-photographed object or person (surface number column in Table 5B → object surface), the stop 1, each lens, and a sensing element (surface number column in Table 5B → image plane) in the lens module 400 in this example. Table 5C shows conic coefficients and aspheric coefficients of the seven lenses in the optical system 10 in this example on the object side surface S1 and the image side surface S2. It may be learned from Table 5C that the first lens L1 to the seventh lens L7 include a total of 14 aspheric surfaces.

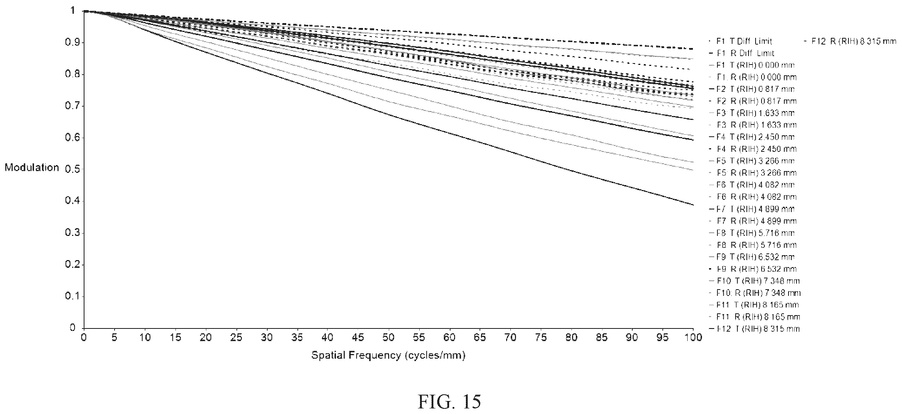

In addition, FIG. 15 is a line graph of a diffraction modulation transfer function of the lens module 400 in this example. It may be learned from FIG. 15 that the lens module 400 in this example can implement high-quality imaging.

**Example 6**

Refer back to FIG. 6. A lens module 400 in this example includes a stop 1, an optical system 10, a light filter 30, and a photosensitive element 20 that are sequentially spaced apart along an optical axis from an object side to an image side. The stop 1 is a stop with a variable aperture. The optical system 10 includes eight (N=8) lenses, and the eight lenses are respectively a first lens L1, a second lens L2, a third lens L3, a fourth lens L4, a fifth lens L5, a sixth lens L6, a seventh lens L7, and an eighth lens L8 that are sequentially spaced apart along the optical axis from the object side to the image side. Similarly, the light filter 30 is an infrared filter. The photosensitive element 20 is a complementary metal-oxide-conductor image sensor.

The first lens L1 has positive focal power; and near the optical axis, an object side surface S1 is a convex surface, and an image side surface S2 is a concave surface. The first lens L1 can effectively converge light incident to the optical system 10, thereby helping shorten a total length of the optical system 10 and facilitating implementation of a miniaturization design. The second lens L2 has negative focal power; and near the optical axis, an object side surface S1 is a convex surface, and an image side surface S2 is a concave surface. The second lens L2 can correct an aberration of emergent light of the first lens L1, thereby improving imaging quality of the optical system 10. The third lens L3 has positive focal power; and near the optical axis, an object side surface S1 is a convex surface, and an image side surface S2 is a concave surface. The third lens L3 can converge emergent beams of the second lens L2, thereby reducing a height of the lens module 400. The fourth lens L4 has negative focal power; and near the optical axis, an object side surface S1 is a concave surface, and an image side surface S2 is a concave surface. The fourth lens L4 with negative focal power is of a concave-concave surface type, and can effectively correct aberrations generated by the first lens L1 and the third lens L3, thereby further improving the imaging quality of the system. The fifth lens L5 has positive focal power; and near the optical axis, an object side surface S1 is a convex surface, and an image side surface S2 is a convex surface. The fifth lens L5 can converge emergent beams of the fourth lens L4, thereby reducing the height of the lens module 400. The sixth lens L6 has negative focal power; and near the optical axis, an object side surface S1 is a convex surface, and an image side surface S2 is a concave surface. The sixth lens L6 can correct an aberration of emergent beams of the fifth lens L5, thereby improving the imaging quality of the optical system 10. The seventh lens L7 has positive focal power; and near the optical axis, an object side surface S1 is a convex surface, and an image side surface S2 is a concave surface. The seventh lens L7 is of a convex-concave surface type near the optical axis. This helps converge light, thereby helping shorten a back focal length and the total length of the optical system 10. In addition, both the object side surface S1 and the image side surface S2 of the seventh lens L7 have inflection surfaces. The inflection surfaces on the seventh lens L7 can balance refraction power distribution in a direction perpendicular to the optical axis, thereby helping correct an aberration of an off-axis field of view, and improving the imaging quality of the optical system 10. The eighth lens L8 has negative focal power; and near the optical axis, an object side surface S1 is a concave surface, and an image side surface S2 is a convex surface. The eighth lens L8 with negative focal power is of a concave-convex surface type near the optical axis. This helps correct an aberration generated by the seventh lens L7, thereby further improving the imaging quality of the system. In addition, both the object side surface S1 and the image side surface S2 of the eighth lens L8 have inflection surfaces. Disposing the inflection surfaces on the eighth lens L8 can balance refraction power distribution in the direction perpendicular to the optical axis, thereby helping correct an aberration of an off-axis field of view, and improving the imaging quality of the optical system 10.

In addition, the lens module 400 satisfies the following conditions: $SAG_{82}/CT_8$=-3.21, $SP_7/(CT_7+CT_8)$=1.28, $(2\times IMH/TTL)^2/FNO$=1.79, $CT_3/CT_2$=1.59, $(R_{71}+R_{72})/f_7$=1.18, $f_{456}/f$=-1.67, and $AB_1/AB_2$=3.44.

Therefore, the lens module 400 may have physical parameters in Table 6A, Table 6B, and Table 6C below.

Table 6A Optical parameters of the lens module in Example 6

| Optical parameter | Value |
|---|---|
| Focal length f/mm | 8.31 |
| F-number F# | 1.68 |
| Maximum half-image height IMH of the photosensitive element/mm | 8.32 |
| Half field of view HFOV/degree | 44.4 |
| Total track length TTL/mm | 9.6 |

Table 6B Physical parameters of elements in the lens module in Example 6

| Lens | Surface number | Curvature radius | Center thickness | Effective focal length | Refractive index | Abbe coefficient |
|---|---|---|---|---|---|---|
| | Object surface | Unlimited | Unlimited | | | |
| | Stop | Unlimited | -0.050 | | | |
| L1 | S1 | 3.197 | 1.244 | 10.16 | 1.50 | 81.56 |
| | S2 | 7.552 | 0.368 | | | |
| L2 | S1 | 7.713 | 0.290 | -50.28 | 1.68 | 19.24 |
| | S2 | 6.193 | 0.081 | | | |
| L3 | S1 | 12.056 | 0.462 | 36.89 | 1.55 | 55.92 |
| | S2 | 29.652 | 0.585 | | | |
| L4 | S1 | -376.103 | 0.376 | -43.85 | 1.67 | 20.10 |
| | S2 | 31.695 | 0.238 | | | |
| L5 | S1 | 22.769 | 0.455 | 36.78 | 1.55 | 55.92 |
| | S2 | -168.291 | 0.648 | | | |

(continued)

| Lens | Surface number | Curvature radius | Center thickness | Effective focal length | Refractive index | Abbe coefficient |
|---|---|---|---|---|---|---|
| | Object surface | Unlimited | Unlimited | | | |
| | Stop | Unlimited | -0.050 | | | |
| L6 | S1 | 17.381 | 0.453 | -13.05 | 1.63 | 23.73 |
| | S2 | 5.543 | 0.304 | | | |
| L7 | S1 | 2.213 | 0.695 | 6.48 | 1.54 | 55.71 |
| | S2 | 5.423 | 1.852 | | | |
| L8 | S1 | -1.818 | 0.749 | -7.59 | 1.55 | 55.92 |
| | S2 | -3.710 | 0.321 | | | |
| IR | S1 | Unlimited | 0.300 | Unlimited | 1.52 | 64.17 |
| | S2 | Unlimited | 0.179 | | | |
| | Image plane | Unlimited | 0.000 | | | |

Table 6C Conic coefficients and aspheric coefficients of lenses in Example 6

| Lens\Parameter | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 | L8 S1 | L8 S2 |
|---|---|---|---|---|---|---|---|---|---|---|---|---|---|---|---|---|
| Conic coefficient K | 8.05E-02 | 1.45E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | -1.00E+00 | 0.00E+00 | -1.00E+00 | -1.00E+00 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | -9.56E | -2.94E | -1.23E | -5.34E- | 7.60E-03 | 1.56E-03 | -1.29E- | -1.23E- | -3.27E- | -4.42E- | -2.77E- | -9.29E- | -5.41E- | 2.29E-02 | 5.10E-02 | 4.10E-02 |

| Lens | L1 | | L2 | | L3 | | L4 | | L5 | | L6 | | L7 | | L8 | |
|---|---|---|---|---|---|---|---|---|---|---|---|---|---|---|---|---|
| Parameter | Surface number | | Surface number | | Surface number | | Surface number | | Surface number | | Surface number | | Surface number | | Surface number | |
| | S1 | S2 | S1 | S2 | S1 | S2 | S1 | S2 | S1 | S2 | S1 | S2 | S1 | S2 | S1 | S2 |
| | −04 | −03 | −02 | 03 | | | 02 | 02 | 03 | 03 | 02 | 02 | 02 | | | |
| A6 | 5.96E−04 | −1.24E−03 | 4.71E−03 | 3.58E−03 | −1.17E−03 | −4.65E−04 | −1.29E−02 | −1.71E−02 | −9.49E−03 | 2.70E−03 | 2.35E−02 | 5.55E−02 | 1.37E−02 | −2.16E−02 | −1.71E−02 | −1.28E−02 |
| A8 | −6.48E−04 | 1.32E−03 | −1.33E−02 | −9.70E−03 | 3.06E−03 | 4.39E−03 | 3.08E−02 | 3.96E−02 | 8.38E−03 | −9.63E−03 | −1.08E−02 | −2.44E−02 | −4.09E−03 | 8.21E−03 | 3.74E−03 | 2.54E−03 |
| A10 | 3.97E−04 | −8.46E−04 | 2.41E−02 | 1.26E−02 | −1.22E−02 | −1.27E−02 | −4.69E−02 | −6.30E−02 | −8.17E−03 | 9.67E−03 | 2.21E−03 | 8.35E−03 | 1.05E−03 | −2.15E−03 | −5.43E−04 | −3.47E−04 |
| A12 | −1.60E−04 | 3.47E−04 | −2.80E−02 | −1.12E−02 | 1.94E−02 | 2.04E−02 | 4.70E−02 | 6.96E−02 | 6.80E−03 | −6.24E−03 | 3.04E−04 | −2.30E−03 | −2.13E−04 | 4.06E−04 | 5.60E−05 | 3.45E−05 |
| A14 | 4.16E−05 | −9.10E−05 | 2.29E−02 | 7.82E−03 | −1.91E−02 | −2.15E−02 | −3.22E−02 | −5.45E−02 | −4.01E−03 | 2.88E−03 | −4.01E−04 | 4.92E−04 | 3.11E−05 | −5.67E−05 | −4.24E−06 | −2.55E−06 |
| A16 | −6.70E−06 | 1.44E−05 | −1.35E−02 | −4.37E−03 | 1.29E−02 | 1.57E−02 | 1.53E−02 | 3.06E−02 | 1.68E−03 | −9.56E−04 | 1.54E−04 | −7.93E−05 | −3.18E−06 | 5.88E−06 | 2.40E−07 | 1.42E−07 |
| A18 | 6.1 | − | 5.7 | 1.88 | − | − | − | − | − | 2.28 | − | 9.39 | 2.28 | − | − | − |

| Parameter \ Lens | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 | L8 S1 | L8 S2 |
|---|---|---|---|---|---|---|---|---|---|---|---|---|---|---|---|---|
| | 0E–07 | 1.26E–06 | 6E–03 | E–03 | 6.21E–03 | 8.09E–03 | 4.90E–03 | 1.25E–02 | 5.10E–04 | E–04 | 3.57E–05 | E–06 | E–07 | 4.53E–07 | 1.01E–08 | 5.91E–09 |
| A20 | –2.44E–08 | 4.60E–08 | –1.77E–03 | –6.12E–04 | 2.13E–03 | 2.97E–03 | 1.01E–03 | 3.68E–03 | 1.13E–04 | –3.88E–05 | 5.53E–06 | –8.08E–07 | –1.14E–08 | 2.57E–08 | 3.18E–10 | 1.83E–10 |
| A22 | 0.00E+00 | 0.00E+00 | 3.86E–04 | 1.47E–04 | –5.13E–04 | –7.70E–04 | –1.07E–04 | –7.77E–04 | –1.80E–05 | –4.68E–06 | 5.87E–07 | –4.96E–08 | 3.96E–10 | –1.05E–09 | 7.31E–12 | 4.17E–12 |
| A24 | 0.00E+00 | 0.00E+00 | –5.83E–05 | –2.53E–05 | 8.45E–05 | 1.38E–04 | –2.53E–06 | 1.15E–04 | 2.00E–06 | –3.91E–07 | 4.21E–08 | –2.12E–09 | –9.19E–12 | 3.01E–11 | 1.19E–13 | 6.72E–14 |
| A26 | 0.00E+00 | 0.00E+00 | 5.79E–06 | 2.95E–06 | –9.04E–06 | –1.62E–05 | 2.34E–06 | –1.12E–05 | 1.48E–07 | –2.15E–08 | –1.95E–09 | 5.97E–11 | 1.33E–13 | –5.71E–13 | 1.31E–15 | 7.24E–16 |
| A28 | 0.00E+00 | 0.00E+00 | –3.40E–07 | –2.07E–07 | 5.63E–07 | 1.12E–06 | –2.81E–07 | 6.51E–07 | 6.45E–09 | –6.99E–10 | 5.23E–11 | –9.99E–13 | –1.02E–15 | 6.45E–15 | 8.62E–18 | 4.68E–18 |
| A30 | 0.00E+00 | 0.00E+00 | 8.92E–09 | 6.59E–09 | –1.55E–08 | –3.49E–08 | 1.19E–08 | –1.70E–08 | 1.26E–10 | –1.02E–11 | 6.15E–13 | –7.52E–15 | 2.64E–18 | –3.27E–17 | –2.59E–20 | –1.37E–20 |

It may be learned from Table 6A that the lens module 400 in this example has a large target surface and a relatively low height. Table 6B lists curvature radiuses, thicknesses, focal lengths, refractive indexes, and Abbe coefficients of a to-be-photographed object or person (surface number column in Table 6B → object surface), the stop 1, each lens, and a sensing element (surface number column in Table 6B → image plane) in the lens module 400 in this example. Table 6C shows conic coefficients and aspheric coefficients of the eight lenses in the optical system 10 in this example on the object side surface S1 and the image side surface S2. It may be learned from Table 6C that the first lens L1 to the eighth lens L8 include a total of 16 aspheric surfaces.

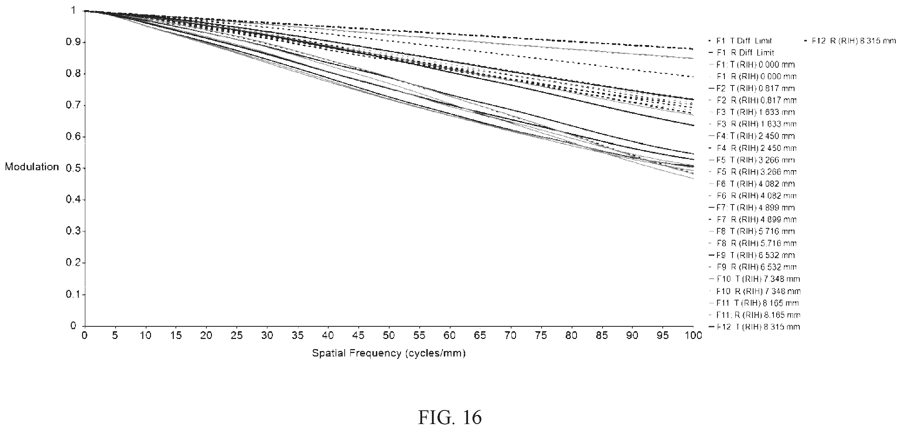

In addition, FIG. 16 is a line graph of a diffraction modulation transfer function of the lens module 400 in this example. It may be learned from FIG. 16 that the lens module 400 in this example can implement high-quality imaging.

**Example 7**

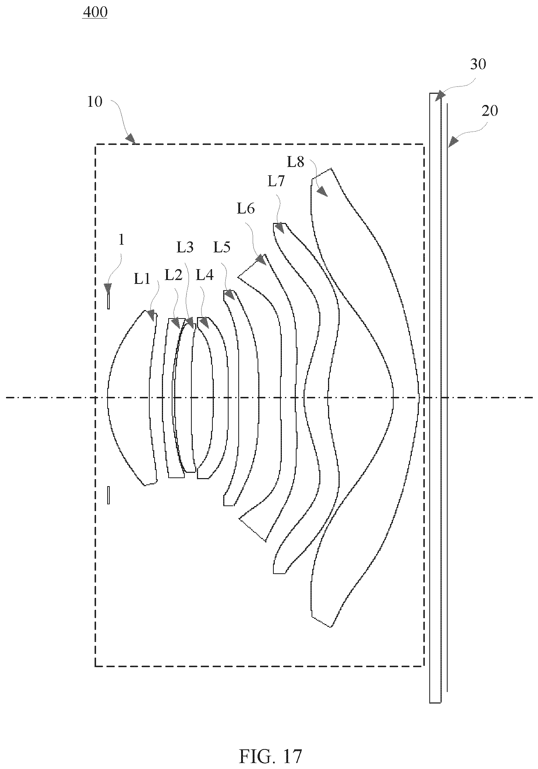

As shown in FIG. 17, composition of optical elements in a lens module 400 in this example is similar to that in Example 6, and a difference lies in that the fourth lens L4 has negative focal power, and near the optical axis, an object side surface S1 is a concave surface, and an image side surface S2 is a convex surface. The fourth lens L4 may balance an aberration of the optical system 10, thereby improving imaging quality of the optical system 10. In addition, the lens module 400 satisfies the following conditions: $SAG_{82}/CT_8$=-3.48, $SP_7/(CT_7+CT_8)$=1.34, $(2\times IMH/TTL)^2/FNO$=1.77, $CT_3/CT_2$=1.66, $(R_{71}+R_{72})/f_7$=1.24, $f_{456}/f$=-1.56, and $AB_1/AB_2$=4.03.

Therefore, the lens module 400 may have physical parameters in Table 7A, Table 7B, and Table 7C below.

Table 7A Optical parameters of the lens module in Example 7

| Optical parameter | Value |
|---|---|
| Focal length f/mm | 8.27 |
| F-number F# | 1.67 |
| Maximum half-image height IMH of the photosensitive element/mm | 8.32 |
| Half field of view HFOV/degree | 44.3 |
| Total track length TTL/mm | 9.68 |

Table 7B Physical parameters of elements in the lens module in Example 7

| Lens | Surface number | Curvature radius | Center thickness | Effective focal length | Refractive index | Abbe coefficient |
|---|---|---|---|---|---|---|
| | Object surface | Unlimited | Unlimited | | | |
| | Stop | Unlimited | -0.050 | | | |
| L1 | S1 | 3.244 | 1.203 | 9.92 | 1.50 | 80.88 |
| | S2 | 8.235 | 0.367 | | | |
| L2 | S1 | 7.854 | 0.280 | -45.60 | 1.66 | 20.34 |
| | S2 | 6.147 | 0.081 | | | |
| L3 | S1 | 11.461 | 0.464 | 37.46 | 1.55 | 56.14 |
| | S2 | 25.701 | 0.624 | | | |
| L4 | S1 | -22.958 | 0.432 | -63.14 | 1.68 | 19.25 |
| | S2 | -50.000 | 0.302 | | | |
| L5 | S1 | 89.449 | 0.563 | 35.21 | 1.55 | 56.14 |
| | S2 | -24.429 | 0.627 | | | |
| L6 | S1 | 23.412 | 0.414 | -11.07 | 1.67 | 20.08 |
| | S2 | 5.567 | 0.251 | | | |
| L7 | S1 | 2.217 | 0.677 | 6.13 | 1.57 | 40.00 |
| | S2 | 5.407 | 1.869 | | | |
| L8 | S1 | -1.859 | 0.721 | -7.00 | 1.61 | 37.90 |
| | S2 | -3.779 | 0.321 | | | |

(continued)

|  |  |  |  |  |  |  |
|---|---|---|---|---|---|---|
|  | Stop | Unlimited | -0.050 |  |  |  |
| IR | S1 | Unlimited | 0.300 | Unlimited | 1.52 | 64.17 |
|  | S2 | Unlimited | 0.179 |  |  |  |
|  | Image plane | Unlimited | 0.000 |  |  |  |

Table 7C Conic coefficients and aspheric coefficients of lenses in Example 7

| Lens |  | L1 |  | L2 |  | L3 |  | L4 |  | L5 |  | L6 |  | L7 |  | L8 |  |
|---|---|---|---|---|---|---|---|---|---|---|---|---|---|---|---|---|---|
|  |  | Surface number |  | Surface number |  | Surface number |  | Surface number |  | Surface number |  | Surface number |  | Surface number |  | Surface number |  |
| Parameter |  | S1 | S2 | S1 | S2 | S1 | S2 | S1 | S2 | S1 | S2 | S1 | S2 | S1 | S2 | S1 | S2 |
| Conic coefficient K |  | 8.76E−02 | 1.01E+00 | −5.78E−02 | −1.99E−01 | −3.26E+00 | −3.06E+01 | −2.52E−01 | −9.80E+01 | 9.80E+01 | 4.97E+01 | −2.83E+01 | 6.18E−02 | −1.00E+00 | 2.09E−04 | −9.96E−01 | −9.83E−01 |

| Lens | L1 | | L2 | | L3 | | L4 | | L5 | | L6 | | L7 | | L8 | |
|---|---|---|---|---|---|---|---|---|---|---|---|---|---|---|---|---|
| Parameter | Surface number | | Surface number | | Surface number | | Surface number | | Surface number | | Surface number | | Surface number | | Surface number | |
| | S1 | S2 | S1 | S2 | S1 | S2 | S1 | S2 | S1 | S2 | S1 | S2 | S1 | S2 | S1 | S2 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | -6.42E-04 | -3.22E-03 | -1.16E-02 | -1.28E-03 | 1.07E-02 | 2.11E-03 | -1.70E-02 | 1.13E-02 | 5.96E-03 | 4.82E-03 | -1.40E-02 | 7.69E-02 | -5.28E-02 | 2.09E-02 | 4.47E-02 | 3.17E-02 |
| A6 | 3.41E-04 | -1.05E-03 | 5.10E-03 | -1.36E-02 | -2.19E-02 | -2.41E-03 | 2.05E-02 | -1.08E-02 | 6.02E-03 | -3.81E-03 | 4.71E-03 | 3.33E-02 | 1.12E-02 | -2.00E-02 | -1.17E-02 | -7.12E-03 |
| A8 | -5.38E-04 | 1.28E-03 | -1.78E-02 | 4.21E-02 | 6.52E-02 | 3.92E-03 | -6.28E-02 | 3.25E-02 | 8.57E-03 | 3.04E-04 | 1.22E-03 | -8.26E-03 | -2.33E-03 | 7.51E-03 | 1.89E-03 | 9.78E-04 |
| A10 | 3.99E-04 | -9.52E-04 | 3.46E-02 | -9.48E-02 | -1.37E-01 | -3.97E-03 | 1.18E-01 | -6.28E-02 | 9.59E-03 | 2.26E-03 | -1.76E-03 | 1.01E-03 | 4.44E-04 | -1.93E-03 | -1.84E-04 | -9.11E-05 |
| A12 | -1.83E-04 | 4.44E-04 | -4.11E-02 | 1.41E-01 | 1.90E-01 | 1.37E-03 | -1.54E-01 | 7.70E-02 | 7.57E-03 | -2.51E-03 | 6.79E-04 | -3.86E-05 | -9.02E-05 | 3.53E-04 | 1.09E-05 | 6.36E-06 |
| A14 | 5.16E- | -1.28E-02 | 3.31E-02 | -1.42E- | -1.81E- | 1.55E-03 | 1.43E-01 | -6.39E- | -4.16E- | 1.47E-03 | -1.54E- | 5.21E-06 | 1.65E-05 | -4.76E- | -3.18E- | -3.59E- |

| Parameter | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 | L8 S1 | L8 S2 |
|---|---|---|---|---|---|---|---|---|---|---|---|---|---|---|---|---|
| | 05 | −04 | | 01 | 01 | | | 02 | 03 | | 04 | | | 05 | 07 | 07 |
| A16 | −8.85E−06 | 2.19E−05 | −1.88E−02 | 9.88E−02 | 1.22E−01 | −2.41E−03 | −9.61E−02 | 3.73E−02 | 1.63E−03 | −5.47E−04 | 2.55E−05 | −4.25E−06 | −2.27E−06 | 4.76E−06 | −4.96E−09 | 1.67E−08 |
| A18 | 8.45E−07 | −2.02E−06 | 7.61E−03 | −4.86E−02 | −5.83E−02 | 1.59E−03 | 4.69E−02 | −1.56E−02 | −4.64E−04 | 1.37E−04 | −3.71E−06 | 1.06E−06 | 2.26E−07 | −3.54E−07 | 9.75E−10 | −6.27E−10 |
| A20 | −3.49E−08 | 7.63E−08 | −2.21E−03 | 1.70E−02 | 1.99E−02 | −6.29E−04 | −1.66E−02 | 4.69E−03 | 9.64E−05 | −2.38E−05 | 4.87E−07 | −1.42E−07 | −1.59E−08 | 1.94E−08 | −4.96E−11 | 1.84E−11 |
| A22 | 0.00E+00 | 0.00E+00 | 4.58E−04 | −4.18E−03 | −4.82E−03 | 1.56E−04 | 4.21E−03 | −1.01E−03 | −1.44E−05 | 2.85E−06 | −5.15E−08 | 1.17E−08 | 7.86E−10 | −7.74E−10 | 1.48E−12 | −4.06E−13 |
| A24 | 0.00E+00 | 0.00E+00 | −6.56E−05 | 7.06E−04 | 8.04E−04 | −2.33E−05 | −7.45E−04 | 1.50E−04 | 1.51E−06 | −2.33E−07 | 3.86E−09 | −6.20E−10 | −2.65E−11 | 2.17E−11 | −2.86E−14 | 6.49E−15 |
| A26 | 0.00E+00 | 0.00E+00 | 6.19E−06 | −7.78E−05 | −8.76E−05 | 1.79E−06 | 8.74E−05 | −1.48E−05 | −1.05E−07 | 1.23E−08 | −1.84E−10 | 2.08E−11 | 5.81E−13 | −4.03E−13 | 3.50E−16 | −7.08E−17 |
| A28 | 0.00E+0 | 0.00E+0 | −3.45E | 5.04E−06 | 5.62E−06 | −3.06E− | −6.11E− | 8.68E−07 | 4.32E−09 | −3.80E− | 4.96E−12 | −4.02E− | −7.46E− | 4.45E−15 | −2.49E− | 4.70E−19 |

| Lens | L1 | | L2 | | L3 | | L4 | | L5 | | L6 | | L7 | | L8 | |
|---|---|---|---|---|---|---|---|---|---|---|---|---|---|---|---|---|
| | Surface number | | Surface number | | Surface number | | Surface number | | Surface number | | Surface number | | Surface number | | Surface number | |
| Parameter | S1 | S2 | S1 | S2 | S1 | S2 | S1 | S2 | S1 | S2 | S1 | S2 | S1 | S2 | S1 | S2 |
| | 0 | 0 | −07 | | | 08 | 06 | | | 10 | | 13 | 15 | | 18 | |
| A30 | 0.00E+00 | 0.00E+00 | 8.63E−09 | −1.45E−07 | −1.60E−07 | −2.91E−09 | 1.92E−07 | −2.28E−08 | 7.97E−11 | 5.16E−12 | −5.61E−14 | 3.43E−15 | 4.25E−17 | −2.21E−17 | 7.88E−21 | −1.43E−21 |

It may be learned from Table 7A that the lens module 400 in this example has a large target surface and a relatively low height. Table 7B lists curvature radiuses, thicknesses, focal lengths, refractive indexes, and Abbe coefficients of a to-be-photographed object or person (surface number column in Table 7B → object surface), the stop 1, each lens, and a sensing element (surface number column in Table 6B → image plane) in the lens module 400 in this example. Table 7C shows conic coefficients and aspheric coefficients of the eight lenses in the optical system 10 in this example on the object side surface S1 and the image side surface S2. It may be learned from Table 7C that the first lens L1 to the eighth lens L8 include a total of 16 aspheric surfaces.

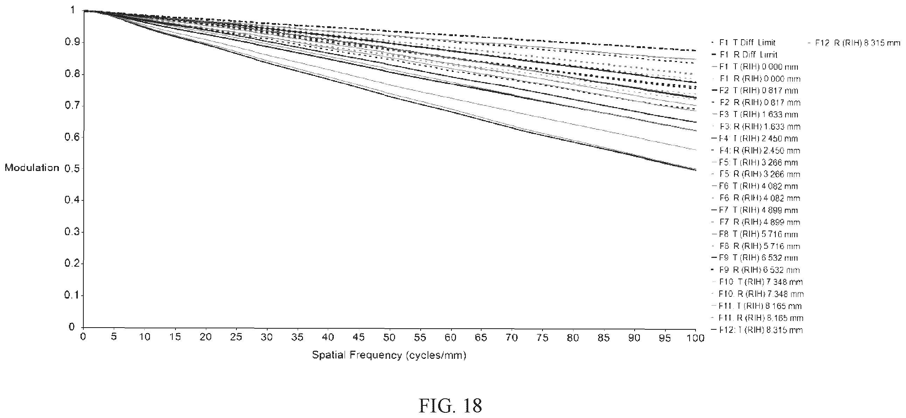

In addition, FIG. 18 is a line graph of a diffraction modulation transfer function of the lens module 400 in this example. It may be learned from FIG. 18 that the lens module 400 in this example can implement high-quality imaging.

**Example 8**

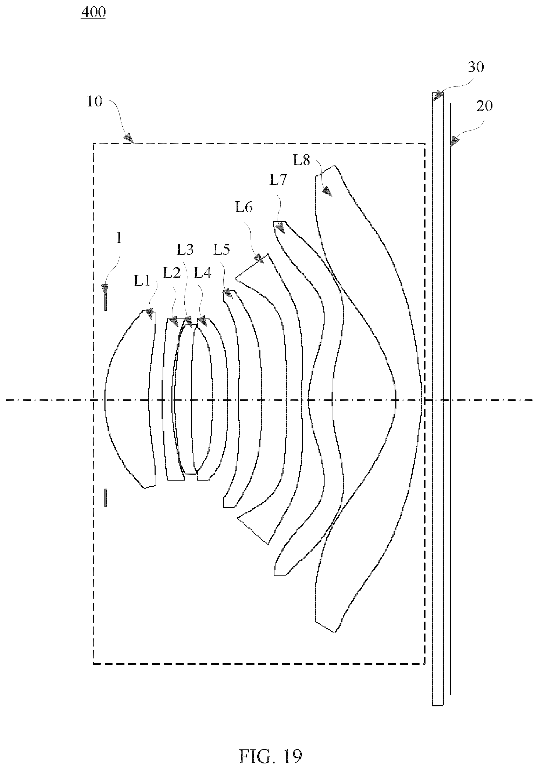

As shown in FIG. 19, composition of optical elements in a lens module 400 in this example is similar to that in Example 6, and a difference lies in that the fourth lens L4 has negative focal power, and near the optical axis, an object side surface S1 is a concave surface, and an image side surface is a convex surface. The fourth lens L4 may balance an aberration of the optical system 10, thereby improving imaging quality of the optical system 10. The sixth lens L6 has negative focal power; and near the optical axis, an object side surface S1 is a concave surface, and an image side surface S2 is a concave surface. The sixth lens L6 may balance an aberration of the optical system 10, thereby improving the imaging quality of the optical system 10. In addition, the lens module 400 satisfies the following conditions: $SAG_{82}/CT_8=-3.37$, $SP_7/(CT_7+CT_8)=1.27$, $(2\times IMH/TTL)^2/FNO=1.76$, $CT_3/CT_2=1.63$, $(R_{71}+R_{72})/f_7=1.46$, $f_{456}/f=-1.37$, and $AB_1/AB_2=4.21$.

Therefore, the lens module 400 may have physical parameters in Table 8A, Table 8B, and Table 8C below.

Table 8A Optical parameters of the lens module in Example 8

| Optical parameter | Value |
|---|---|
| Focal length f/mm | 8.27 |
| F-number F# | 1.66 |
| Maximum half-image height IMH of the photosensitive element/mm | 8.32 |
| Half field of view HFOV/degree | 44.3 |
| Total track length TTL/mm | 9.72 |

Table 8B Physical parameters of elements in the lens module in Example 8

| Lens | Surface number | Curvature radius | Center thickness | Effective focal length | Refractive index | Abbe coefficient |
|---|---|---|---|---|---|---|
| | Object surface | Unlimited | Unlimited | | | |
| | Stop | Unlimited | -0.050 | | | |
| L1 | S1 | 3.261 | 1.238 | 9.72 | 1.50 | 83.10 |
| | S2 | 8.726 | 0.364 | | | |
| L2 | S1 | 8.987 | 0.280 | -41.02 | 1.64 | 22.38 |
| | S2 | 6.624 | 0.076 | | | |
| L3 | S1 | 11.553 | 0.456 | 37.70 | 1.55 | 54.19 |
| | S2 | 25.851 | 0.603 | | | |
| L4 | S1 | -27.522 | 0.425 | -55.43 | 1.68 | 19.25 |
| | S2 | -103.986 | 0.331 | | | |
| L5 | S1 | 33.951 | 0.651 | 21.54 | 1.55 | 56.14 |
| | S2 | -17.861 | 0.686 | | | |
| L6 | S1 | -64.149 | 0.416 | -8.39 | 1.67 | 19.72 |
| | S2 | 6.184 | 0.201 | | | |
| L7 | S1 | 2.276 | 0.681 | 5.70 | 1.60 | 29.61 |
| | S2 | 6.025 | 1.786 | | | |
| L8 | S1 | -1.908 | 0.726 | -6.96 | 1.60 | 38.71 |
| | S2 | -4.000 | 0.321 | | | |
| IR | S1 | Unlimited | 0.300 | Unlimited | 1.52 | 64.17 |
| | S2 | Unlimited | 0.179 | | | |
| | Image plane | Unlimited | 0.000 | | | |

Table 8C Conic coefficients and aspheric coefficients of lenses in Example 8

| Lens \ Parameter | L1 Surface number | | L2 Surface number | | L3 Surface number | | L4 Surface number | | L5 Surface number | | L6 Surface number | | L7 Surface number | | L8 Surface number | |
|---|---|---|---|---|---|---|---|---|---|---|---|---|---|---|---|---|
| | S1 | S2 | S1 | S2 | S1 | S2 | S1 | S2 | S1 | S2 | S1 | S2 | S1 | S2 | S1 | S2 |
| Conic coefficient K | 9.03E−02 | 6.55E−01 | −1.10E+00 | −1.45E−01 | −8.16E+00 | −6.33E+01 | −8.19E+01 | 9.80E+01 | −9.80E+01 | 3.21E+01 | −9.80E+01 | 2.29E−01 | −1.01E+00 | 4.71E−02 | −9.93E−01 | −9.58E−01 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | −5.66E−04 | −3.33E−03 | −1.06E−02 | 1.30E−03 | 1.06E−02 | 3.93E−03 | −1.03E−02 | −6.38E−03 | −2.30E−03 | −5.79E−05 | −5.50E−03 | −7.55E−02 | −5.76E−02 | 2.12E−02 | 4.82E−02 | 3.44E−02 |
| A6 | 2.33E−05 | −7.31E−04 | −3.03E−03 | −1.74E−02 | −1.59E−02 | −1.27E−02 | −9.07E−03 | −3.02E−02 | −1.88E−02 | −1.21E−02 | −1.63E−03 | 3.22E−02 | 1.70E−02 | −1.76E−02 | −1.28E−02 | −7.59E−03 |
| A8 | −1.32E−04 | 7.79E−04 | −1.24E−02 | 4.58E−02 | 3.99E−02 | 3.38E−02 | 1.07E−02 | 5.91E−02 | 2.49E−02 | 1.09E−02 | 3.20E−03 | −8.13E−03 | −5.22E−03 | 6.25E−03 | 2.11E−03 | 9.68E−04 |
| A10 | 1.0 | − | 2.4 | − | − | − | − | − | − | − | − | 1.16 | 1.42 | − | − | − |

| Parameter \ Lens | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 | L8 S1 | L8 S2 |
|---|---|---|---|---|---|---|---|---|---|---|---|---|---|---|---|---|
| | 6E-04 | 5.30E-04 | 5E-02 | 9.47E-02 | 8.38E-02 | 6.01E-02 | 8.08E-03 | 8.05E-02 | 2.26E-02 | 6.72E-03 | 1.21E-03 | E-03 | E-03 | 1.51E-03 | 2.23E-04 | 7.56E-05 |
| A12 | -5.41E-05 | 2.34E-04 | -2.80E-02 | 1.34E-01 | 1.18E-01 | 7.29E-02 | 1.31E-03 | 7.75E-02 | 1.49E-02 | 3.07E-03 | -1.76E-04 | -1.06E-04 | -3.23E-04 | 2.55E-04 | 1.64E-05 | 3.13E-06 |
| A14 | 1.64E-05 | -6.59E-05 | -2.13E-02 | 1.30E-01 | 1.13E-01 | 6.27E-02 | -3.91E-03 | 5.38E-02 | 7.16E-03 | 1.06E-03 | 3.00E-04 | 1.57E-05 | 5.60E-05 | -3.12E-05 | -8.61E-07 | 3.37E-08 |
| A16 | -3.01E-06 | 1.11E-05 | -1.13E-02 | 8.84E-02 | 7.65E-02 | 3.92E-02 | -4.69E-03 | 2.73E-02 | 2.52E-03 | 2.79E-04 | -1.25E-04 | -4.33E-06 | -7.07E-06 | 2.79E-06 | 3.22E-08 | -1.48E-08 |
| A18 | 3.04E-07 | -1.01E-06 | -4.32E-03 | 4.26E-02 | 3.68E-02 | 1.81E-02 | 2.86E-03 | 1.01E-02 | 6.50E-04 | 5.78E-05 | 3.06E-05 | 8.40E-07 | 6.40E-07 | -1.85E-07 | -8.09E-10 | 1.10E-09 |
| A20 | -1.35E-08 | 3.82E-08 | -1.18E-03 | 1.46E-02 | 1.26E-02 | 6.16E-03 | -1.11E-03 | 2.75E-03 | 1.23E-04 | 9.39E-06 | -5.03E-06 | -1.02E-07 | -4.14E-08 | 9.02E-09 | 1.14E-11 | -4.79E-11 |
| A22 | 0.00E+00 | 0.00E+00 | 2.28E-04 | -3.54E-03 | -3.04E-03 | -1.53E-03 | 2.88E-04 | -5.38E-04 | -1.68E-05 | -1.17E-06 | 5.74E-07 | 8.01E-09 | 1.89E-09 | -3.20E-10 | 3.71E-15 | 1.36E-12 |

| Lens / Parameter | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 | L8 S1 | L8 S2 |
|---|---|---|---|---|---|---|---|---|---|---|---|---|---|---|---|---|
| A24 | 0.00E+00 | 0.00E+00 | −3.06E−05 | 5.91E−04 | 5.05E−04 | 2.68E−04 | −5.00E−05 | 7.41E−05 | 1.61E−06 | 1.06E−07 | −4.50E−08 | −4.15E−10 | −5.93E−11 | 7.97E−12 | −3.67E−15 | −2.55E−14 |
| A26 | 0.00E+00 | 0.00E+00 | 2.69E−06 | −6.46E−05 | −5.48E−05 | −3.17E−05 | 5.56E−06 | −6.78E−06 | 1.03E−06 | 6.56E−09 | 2.31E−09 | 1.37E−11 | 1.22E−12 | −1.33E−13 | 7.32E−17 | 3.07E−16 |
| A28 | 0.00E+00 | 0.00E+00 | −1.39E−07 | 4.15E−06 | 3.49E−06 | 2.25E−06 | −3.60E−07 | 3.70E−07 | 3.90E−09 | 2.44E−10 | −7.03E−11 | 2.63E−13 | 1.47E−14 | 1.31E−15 | −6.62E−19 | −2.14E−18 |
| A30 | 0.00E+00 | 0.00E+00 | 3.19E−09 | −1.19E−07 | −9.89E−08 | −7.27E−08 | 1.03E−08 | −9.10E−09 | 6.67E−11 | 4.08E−12 | 9.57E−13 | 2.23E−15 | 7.89E−17 | −5.87E−18 | 2.42E−21 | 6.61E−21 |

It may be learned from Table 8A that the lens module 400 in this example has a large target surface and a relatively low height. Table 8B lists curvature radiuses, thicknesses, focal lengths, refractive indexes, and Abbe coefficients of a to-be-photographed object or person (surface number column in Table 8B → object surface), the stop 1, each lens, and a sensing element (surface number column in Table 8B → image plane) in the lens module 400 in this example. Table 8C shows conic coefficients and aspheric coefficients of the eight lenses in the optical system 10 in this example on the object side surface S1 and the image side surface S2. It may be learned from Table 8C that the first lens L1 to the eighth lens L8 include a total of 16 aspheric surfaces.

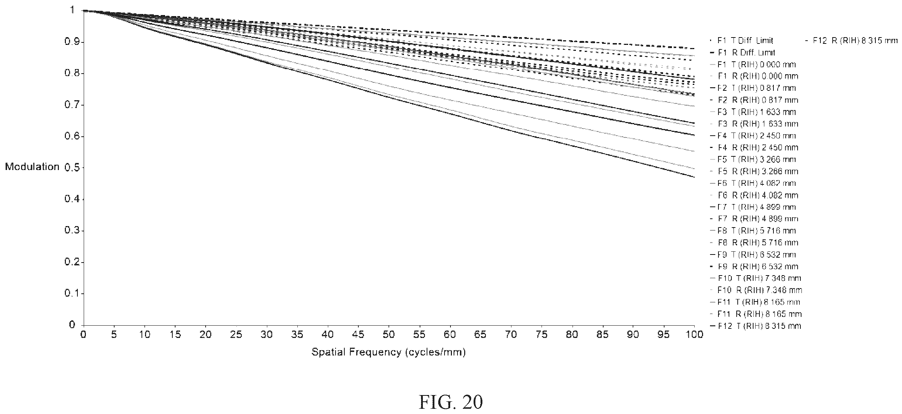

In addition, FIG. 20 is a line graph of a diffraction modulation transfer function of the lens module 400 in this example. It may be learned from FIG. 20 that the lens module 400 in this example can implement high-quality imaging.

## Example 9

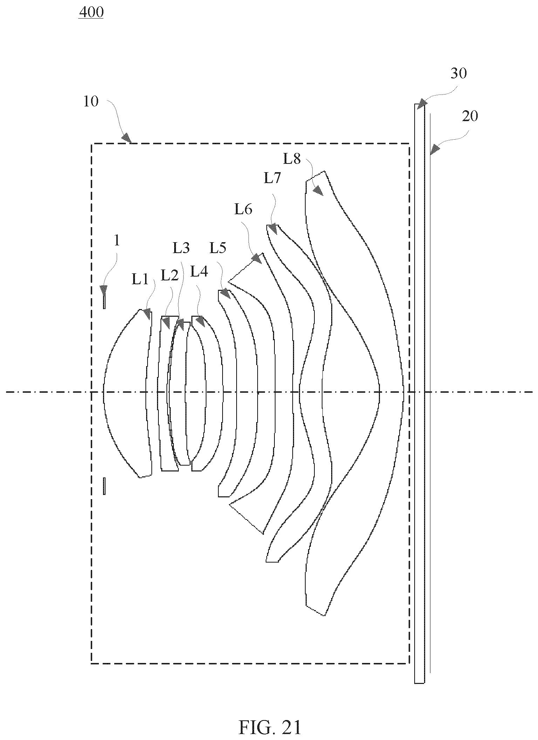

As shown in FIG. 21, composition of optical elements in a lens module 400 in this example is similar to that in Example 6, and a difference lies in that the fourth lens L4 has positive focal power, and near the optical axis, an object side surface S1 is a concave surface, and an image side surface S2 is a convex surface. The fourth lens L4 may converge emergent beams of the third lens L3, thereby reducing a height of the lens module 400. The fifth lens L5 has positive focal power; and near the optical axis, an object side surface S1 is a concave surface, and an image side surface S2 is a convex surface. The fifth lens L5 can converge emergent beams of the fourth lens L4, thereby reducing the height of the lens module 400. The sixth lens L6 has negative focal power; and near the optical axis, an object side surface S1 is a convex surface, and an image side surface S2 is a concave surface. The sixth lens L6 may balance an aberration of the optical system 10, thereby improving imaging quality of the optical system 10. In addition, the lens module 400 satisfies the following conditions: $SAG_{82}/CT_8=-3.34$, $SP_7/(CT_7+CT_8)=1.26$, $(2\times IMH/TTL)^2/FNO=1.77$, $CT_3/CT_2=1.71$, $(R_{71}+R_{72})/f_7=1.47$, $f_{456}/f=-1.36$, and $AB_1/AB_2=4.22$.

Therefore, the lens module 400 may have physical parameters in Table 9A, Table 9B, and Table 9C below.

Table 9A Optical parameters of the lens module in Example 9

| Optical parameter | Value |
|---|---|
| Focal length f/mm | 8.27 |
| F-number F# | 1.65 |
| Maximum half-image height IMH of the photosensitive element/mm | 8.32 |
| Half field of view HFOV/degree | 44.3 |
| Total track length TTL/mm | 9.74 |

Table 9B Physical parameters of elements in the lens module in Example 9

| Lens | Surface number | Curvature radius | Center thickness | Effective focal length | Refractive index | Abbe coefficient |
|---|---|---|---|---|---|---|
| | Object surface | Unlimited | Unlimited | | | |
| | Stop | Unlimited | -0.050 | | | |
| L1 | S1 | 3.261 | 1.269 | 10.20 | 1.50 | 81.15 |
| | S2 | 9.098 | 0.347 | | | |
| L2 | S1 | 10.251 | 0.280 | -33.23 | 1.66 | 20.62 |
| | S2 | 6.912 | 0.071 | | | |
| L3 | S1 | 11.258 | 0.480 | 31.77 | 1.55 | 47.14 |
| | S2 | 30.685 | 0.601 | | | |
| L4 | S1 | -23.301 | 0.520 | 113.55 | 1.63 | 23.62 |
| | S2 | -17.756 | 0.415 | | | |
| L5 | S1 | -53.856 | 0.625 | 47.81 | 1.55 | 56.14 |
| | S2 | -17.652 | 0.513 | | | |
| L6 | S1 | -70.135 | 0.512 | -8.29 | 1.68 | 19.25 |
| | S2 | 6.113 | 0.202 | | | |
| L7 | S1 | 2.266 | 0.669 | 5.66 | 1.60 | 29.72 |
| | S2 | 6.054 | 1.729 | | | |
| L8 | S1 | -1.933 | 0.706 | -6.46 | 1.65 | 33.53 |
| | S2 | -4.075 | 0.321 | | | |
| IR | S1 | Unlimited | 0.300 | Unlimited | 1.52 | 64.17 |
| | S2 | Unlimited | 0.179 | | | |
| | Image plane | Unlimited | 0.000 | | | |

44

Table 9C Conic coefficients and aspheric coefficients of lenses in Example 9

| Parameter | L1 Surface number S1 | S2 | L2 Surface number S1 | S2 | L3 Surface number S1 | S2 | L4 Surface number S1 | S2 | L5 Surface number S1 | S2 | L6 Surface number S1 | S2 | L7 Surface number S1 | S2 | L8 Surface number S1 | S2 |
|---|---|---|---|---|---|---|---|---|---|---|---|---|---|---|---|---|
| Conic coefficient K | 8.90E-02 | 4.27E-01 | -1.77E+00 | -2.44E-01 | -9.51E+00 | -9.80E+01 | -9.80E+01 | 3.92E+01 | -9.80E+01 | 3.06E+01 | 9.80E+01 | 2.16E-01 | -1.01E+00 | 5.26E-02 | -9.91E-01 | 9.57E-01 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |

| Lens / Parameter | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 | L8 S1 | L8 S2 |
|---|---|---|---|---|---|---|---|---|---|---|---|---|---|---|---|---|
| | \(Surface number\) | | | | | | | | | | | | | | | |
| A4 | −3.49E−04 | −3.29E−03 | −7.50E−03 | 3.39E−03 | 1.44E−02 | 4.40E−03 | −2.74E−02 | −1.29E−02 | −2.46E−03 | −1.08E−03 | −3.91E−03 | −7.55E−02 | −5.93E−02 | 2.00E−02 | 5.03E−02 | 3.55E−02 |
| A6 | −3.39E−04 | −7.73E−04 | −9.20E−03 | −2.00E−02 | 2.75E−02 | 1.57E−02 | 7.86E−02 | −1.55E−03 | 1.85E−02 | 1.03E−02 | −6.99E−04 | 3.66E−02 | 1.99E−02 | −1.57E−02 | −1.43E−02 | −8.84E−03 |
| A8 | 2.37E−04 | 8.27E−04 | 1.63E−02 | 4.31E−02 | 5.96E−02 | 4.06E−02 | −2.29E−01 | 7.26E−03 | 2.89E−02 | 1.05E−02 | 1.40E−03 | −1.31E−02 | −7.30E−03 | 4.99E−03 | 2.65E−03 | 1.43E−03 |
| A10 | −1.30E−04 | −5.88E−04 | −1.86E−02 | −8.06E−02 | −1.05E−01 | −7.24E−02 | 4.15E−01 | −1.98E−02 | 3.05E−02 | 8.33E−03 | −4.26E−04 | 3.81E−03 | 2.23E−03 | −1.04E−03 | −3.40E−04 | −1.71E−04 |
| A12 | 4.25E−05 | 2.73E−04 | 1.62E−02 | 1.11E−01 | 1.31E−01 | 8.85E−02 | −5.12E−01 | 2.83E−02 | 2.24E−02 | 5.13E−03 | −2.32E−04 | −9.52E−04 | −5.17E−04 | 1.48E−04 | 3.26E−05 | 1.60E−05 |
| A14 | −8.60E−06 | −7.99E−05 | −1.06E−02 | −1.07E−01 | −1.16E−01 | −7.62E−02 | 4.46E−01 | −2.55E−02 | 1.16E−02 | 2.33E−03 | 2.34E−04 | 1.94E−04 | 8.64E−05 | −1.46E−05 | −2.39E−06 | −1.14E−06 |
| A16 | 9.54E−07 | 1.39E−05 | 5.23E−03 | 7.29E− | 7.42E−02 | 4.73E−02 | −2.79E− | 1.55E−02 | 4.31E−03 | 7.65E−04 | −9.72E− | −3.01E− | −1.03E− | 1.03E−06 | 1.34E−07 | 6.02E−08 |

| Parameter \ Lens | L1 | | L2 | | L3 | | L4 | | L5 | | L6 | | L7 | | L8 | |
|---|---|---|---|---|---|---|---|---|---|---|---|---|---|---|---|---|
| | Surface number | | Surface number | | Surface number | | Surface number | | Surface number | | Surface number | | Surface number | | Surface number | |
| | S1 | S2 | S1 | S2 | S1 | S2 | S1 | S2 | S1 | S2 | S1 | S2 | S1 | S2 | S1 | S2 |
| | | | | 02 | | | 01 | | | | 05 | 05 | 05 | | | |
| A18 | −4.51E−08 | −1.30E−06 | −1.94E−03 | −3.54E−02 | −3.43E−02 | −2.14E−02 | 1.27E−01 | −6.58E−03 | −1.16E−03 | −1.83E−04 | 2.53E−05 | 3.49E−06 | 8.74E−07 | −5.26E−08 | −5.64E−09 | −2.32E−09 |
| A20 | −3.76E−10 | 5.01E−08 | 5.40E−04 | 1.22E−02 | 1.14E−02 | 7.05E−03 | −4.23E−02 | 1.98E−03 | 2.26E−04 | 3.16E−05 | −4.48E−06 | −2.94E−07 | −5.32E−08 | 1.94E−09 | 1.77E−10 | 6.40E−11 |
| A22 | 0.00E+00 | 0.00E+00 | −1.11E−04 | −2.98E−03 | −2.69E−03 | −1.69E−03 | 1.01E−02 | −4.20E−04 | −3.15E−05 | −3.93E−06 | 5.49E−07 | 1.78E−08 | 2.29E−09 | −4.99E−11 | −4.03E−12 | −1.24E−12 |
| A24 | 0.00E+00 | 0.00E+00 | 1.61E−05 | 4.99E−04 | 4.39E−04 | 2.85E−04 | −1.70E−03 | 6.15E−05 | 3.08E−06 | 3.40E−07 | −4.58E−08 | −7.54E−10 | −6.81E−11 | 8.41E−13 | 6.50E−14 | 1.62E−14 |
| A26 | 0.00E+00 | 0.00E+00 | −1.58E−06 | −5.47E−05 | −4.69E−05 | −3.23E−05 | 1.90E−04 | −5.90E−06 | −1.99E−07 | −1.95E−08 | 2.49E−09 | 2.11E−11 | 1.33E−12 | −7.87E−15 | −7.01E−16 | −1.34E−16 |
| A28 | 0.00E+00 | 0.00E+00 | 9.34E−08 | 3.52E−06 | 2.94E−06 | 2.21E−06 | −1.27E−05 | 3.35E−07 | 7.67E−09 | 6.64E−10 | −7.91E−11 | −3.52E−13 | −1.53E−14 | 1.90E−17 | 4.52E−18 | 6.13E−19 |
| A30 | 0.00E | 0.00E | −2.4 | −1.0 | 8.21 | −6.89 | 3.82E− | −8.49 | −1.33 | −1.01 | 1.12E− | 2.65E− | 7.89E− | 1.91E− | −1.32 | −1.12 |

| Lens / Parameter | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 | L8 S1 | L8 S2 |
|---|---|---|---|---|---|---|---|---|---|---|---|---|---|---|---|---|
| | +00 | +00 | 9E-09 | 1E-07 | E-08 | E-08 | 07 | E-09 | E-10 | E-11 | 12 | 15 | 17 | 19 | E-20 | E-21 |

It may be learned from Table 9A that the lens module 400 in this example has a large target surface and a relatively low height. Table 9B lists curvature radiuses, thicknesses, focal lengths, refractive indexes, and Abbe coefficients of a to-be-photographed object or person (surface number column in Table 9B → object surface), the stop 1, each lens, and a sensing element (surface number column in Table 9B → image plane) in the lens module 400 in this example. Table 9C shows conic coefficients and aspheric coefficients of the eight lenses in the optical system 10 in this example on the object side surface S1 and the image side surface S2. It may be learned from Table 9C that the first lens L1 to the eighth lens L8 include a total of 16 aspheric surfaces.

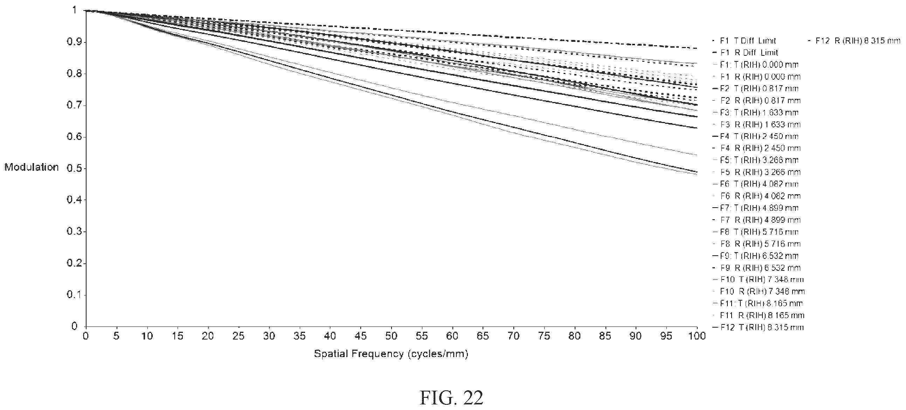

In addition, FIG. 22 is a line graph of a diffraction modulation transfer function of the lens module 400 in this example. It may be learned from FIG. 22 that the lens module 400 in this example can implement high-quality imaging.

**Example 10**

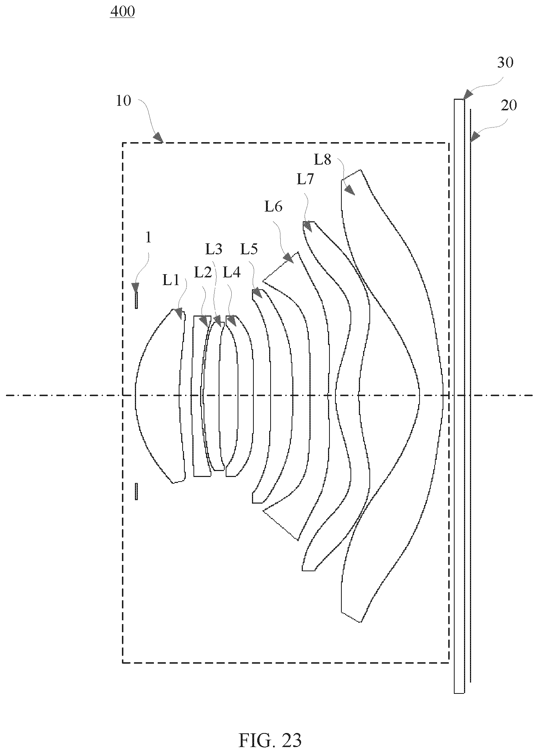

As shown in FIG. 23, composition of optical elements in a lens module 400 in this example is similar to that in Example 6, and a difference lies in that the fourth lens L4 has positive focal power, and near the optical axis, an object side surface S1 is a convex surface, and an image side surface S2 is a concave surface. The fourth lens L4 may converge emergent beams of the third lens L3, thereby reducing a height of the lens module 400. The sixth lens L6 has negative focal power; and near the optical axis, an object side surface S1 is a concave surface, and an image side surface S2 is a concave surface. The sixth lens L6 may balance an aberration of the optical system 10, thereby improving imaging quality of the optical system 10. In addition, the lens module 400 satisfies the following conditions: $SAG_{82}/CT_8=-3.45$, $SP_7/(CT_7+CT_8)=1.27$, $(2 \times IMH/TTL)^2/FNO=1.77$, $CT_3/CT_2=1.62$, $(R_{71}+R_{72})/f_7=1.43$, $f_{456}/f=-1.55$, and $AB_1/AB_2=3.88$.

Therefore, the lens module 400 may have physical parameters in Table 10A, Table 10B, and Table 10C below.

Table 10A Optical parameters of the lens module in Example 10

| Optical parameter | Value |
|---|---|
| Focal length f/mm | 8.27 |
| F-number F# | 1.64 |
| Maximum half-image height IMH of the photosensitive element/mm | 8.32 |
| Half field of view HFOV/degree | 44.3 |
| Total track length TTL/mm | 9.76 |

Table 10B Physical parameters of elements in the lens module in Example 10

| Lens | Surface number | Curvature radius | Center thickness | Effective focal length | Refractive index | Abbe coefficient |
|---|---|---|---|---|---|---|
| | Object surface | Unlimited | Unlimited | | | |
| | Stop | Unlimited | -0.050 | | | |
| L1 | S1 | 3.294 | 1.284 | 9.38 | 1.50 | 83.10 |
| | S2 | 9.732 | 0.342 | | | |
| L2 | S1 | 12.403 | 0.280 | -32.19 | 1.64 | 22.93 |
| | S2 | 7.671 | 0.076 | | | |

(continued)

| Lens | Surface number | Curvature radius | Center thickness | Effective focal length | Refractive index | Abbe coefficient |
|---|---|---|---|---|---|---|
| | Object surface | Unlimited | Unlimited | | | |
| | Stop | Unlimited | -0.050 | | | |
| L3 | S1 | 12.258 | 0.455 | 41.64 | 1.56 | 48.29 |
| | S2 | 25.756 | 0.543 | | | |
| L4 | S1 | 51.363 | 0.455 | 1681.27 | 1.62 | 25.69 |
| | S2 | 53.855 | 0.493 | | | |
| L5 | S1 | 168.387 | 0.649 | 29.45 | 1.55 | 56.14 |
| | S2 | -17.750 | 0.505 | | | |
| L6 | S1 | -69.497 | 0.530 | -8.59 | 1.65 | 21.44 |
| | S2 | 6.103 | 0.213 | | | |
| L7 | S1 | 2.266 | 0.680 | 5.82 | 1.58 | 34.25 |
| | S2 | 6.066 | 1.755 | | | |
| L8 | S1 | -1.939 | 0.699 | -6.73 | 1.63 | 37.44 |
| | S2 | -4.076 | 0.321 | | | |
| IR | S1 | Unlimited | 0.300 | Unlimited | 1.52 | 64.17 |
| | S2 | Unlimited | 0.179 | | | |
| | Image plane | Unlimited | 0.000 | | | |

Table 10C Conic coefficients and aspheric coefficients of lenses in Example 10

| Lens / Parameter | L1 Surface number | | L2 Surface number | | L3 Surface number | | L4 Surface number | | L5 Surface number | | L6 Surface number | | L7 Surface number | | L8 Surface number | |
|---|---|---|---|---|---|---|---|---|---|---|---|---|---|---|---|---|
| | S1 | S2 | S1 | S2 | S1 | S2 | S1 | S2 | S1 | S2 | S1 | S2 | S1 | S2 | S1 | S2 |
| Conic coefficient K | 8.80E-02 | 1.21E-01 | 1.20E+00 | 1.18E-01 | -1.05E+01 | -8.51E+01 | 4.93E+01 | -9.80E+01 | -9.80E+01 | 3.07E+01 | -9.80E+01 | 2.26E-01 | -1.00E+00 | 5.46E-02 | -9.90E-01 | -9.47E-01 |
| A2 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 | 0.00E+00 |
| A4 | -6.16E-04 | -3.75E-03 | -1.14E-02 | 9.52E-05 | -8.20E-03 | -4.28E-04 | -1.64E-02 | -1.09E-02 | -1.79E-03 | -3.88E-03 | -1.08E-03 | -7.25E-02 | -5.71E-02 | 2.12E-02 | 4.96E-02 | 3.47E-02 |
| A6 | 1.48E-05 | -8.52E-04 | 3.64E-03 | 6.99E-03 | -1.46E-04 | 2.68E-03 | 1.53E-02 | -1.04E-02 | -1.66E-02 | -1.79E-02 | -3.83E-03 | 3.14E-02 | 1.70E-02 | -1.72E-02 | -1.37E-02 | -8.02E-03 |
| A8 | -1.22E-04 | 9.68E-04 | -1.19E-02 | 1.50E-02 | -5.32E-03 | -6.20E-03 | -5.20E-02 | 1.63E-02 | 2.20E-02 | 1.75E-02 | 3.57E-03 | -8.73E-03 | -5.76E-03 | 5.81E-03 | 2.49E-03 | 1.18E-03 |
| A10 | 9.98E | -6.6 | 2.13E | -3.4 | 2.46E- | 1.07E- | 9.96E- | -1.83 | -2.09 | -1.30 | -1.19 | 1.60E- | 1.80E- | -1.27 | -3.11 | -1.30 |

| Lens / Parameter | L1 S1 | L1 S2 | L2 S1 | L2 S2 | L3 S1 | L3 S2 | L4 S1 | L4 S2 | L5 S1 | L5 S2 | L6 S1 | L6 S2 | L7 S1 | L7 S2 | L8 S1 | L8 S2 |
|---|---|---|---|---|---|---|---|---|---|---|---|---|---|---|---|---|
| (Surface number) | −05 | 0E−04 | −02 | 8E−02 | 03 | 02 | 02 | E−02 | E−02 | E−02 | E−03 | 03 | 03 | E−03 | E−04 | E−04 |
| A12 | −5.32E−05 | 2.95E−04 | −2.22E−02 | 5.27E−02 | 3.75E−03 | −1.40E−02 | 1.26E−01 | 1.46E−02 | 1.43E−02 | 7.15E−03 | −2.80E−04 | −2.25E−04 | −4.49E−04 | 1.85E−04 | 2.91E−05 | 1.13E−05 |
| A14 | 1.68E−05 | −8.31E−05 | 1.55E−02 | −5.18E−02 | −6.92E−03 | 1.32E−02 | 1.10E−01 | −8.45E−03 | 7.01E−03 | 2.89E−03 | 3.97E−04 | 3.02E−05 | 8.10E−05 | −1.84E−05 | 2.07E−06 | 7.79E−07 |
| A16 | −3.16E−06 | 1.39E−05 | −7.58E−03 | 3.46E−02 | 5.69E−03 | −8.88E−03 | −6.83E−02 | 3.50E−03 | 2.49E−03 | 8.58E−04 | −1.73E−04 | −4.21E−06 | −1.03E−05 | 1.24E−06 | 1.11E−07 | 4.08E−08 |
| A18 | 3.22E−07 | −1.25E−06 | 2.66E−03 | −1.62E−02 | −2.92E−03 | 4.23E−03 | 3.08E−02 | −1.03E−03 | 6.42E−04 | 1.89E−04 | 4.52E−05 | 5.19E−07 | 9.36E−07 | −5.46E−08 | 4.49E−09 | 1.58E−09 |
| A20 | −1.40E−08 | 4.63E−08 | −6.71E−04 | 5.37E−03 | 1.00E−03 | −1.42E−03 | 1.00E−02 | 2.12E−04 | 1.21E−04 | 3.07E−05 | −7.91E−06 | −4.87E−08 | −6.02E−08 | 1.31E−09 | 1.34E−10 | 4.45E−11 |
| A22 | 0.00E+00 | 0.00E+00 | 1.20E−04 | −1.25E−03 | −2.32E−04 | 3.30E−04 | 2.35E−03 | −2.84E−05 | 1.64E−05 | 3.63E−06 | 9.52E−07 | 3.26E−09 | 2.73E−09 | 5.62E−13 | −2.89E−12 | 8.98E−13 |

| Lens | L1 | | L2 | | L3 | | L4 | | L5 | | L6 | | L7 | | L8 | |
| --- | --- | --- | --- | --- | --- | --- | --- | --- | --- | --- | --- | --- | --- | --- | --- | --- |
| | Surface number | | Surface number | | Surface number | | Surface number | | Surface number | | Surface number | | Surface number | | Surface number | |
| Parameter | S1 | S2 | S1 | S2 | S1 | S2 | S1 | S2 | S1 | S2 | S1 | S2 | S1 | S2 | S1 | S2 |
| A24 | 0.00E+00 | 0.00E+00 | −1.48E−05 | 2.02E−04 | 3.54E−05 | −5.17E−05 | −3.85E−04 | 2.09E−06 | 1.55E−06 | 3.03E−07 | −7.81E−08 | −1.51E−10 | −8.51E−11 | −1.17E−12 | 4.40E−14 | 1.26E−14 |
| A26 | 0.00E+00 | 0.00E+00 | −1.19E−06 | 2.12E−05 | −3.36E−06 | 5.11E−06 | 4.19E−05 | −2.24E−08 | 9.77E−08 | 1.69E−08 | 4.17E−09 | 4.57E−12 | 1.74E−12 | 3.82E−14 | −4.46E−16 | −1.17E−16 |
| A28 | 0.00E+00 | 0.00E+00 | −5.55E−08 | 1.31E−06 | 1.76E−07 | −2.81E−07 | −2.72E−06 | −8.32E−09 | 3.65E−09 | 5.60E−10 | 1.31E−10 | 8.21E−14 | 2.09E−14 | 5.64E−16 | 2.71E−18 | 6.45E−19 |
| A30 | 0.00E+00 | 0.00E+00 | −1.13E−09 | 3.64E−08 | −3.71E−09 | 6.20E−09 | 7.98E−08 | 4.53E−10 | −6.13E−11 | −8.38E−12 | 1.83E−12 | 6.62E−16 | 1.13E−16 | 3.35E−18 | −7.45E−21 | −1.61E−21 |

It may be learned from Table 10A that the lens module 400 in this example has a large target surface and a relatively low height. Table 10B lists curvature radiuses, thicknesses, focal lengths, refractive indexes, and Abbe coefficients of a to-be-photographed object or person (surface number column in Table 10B → object surface), the stop 1, each lens, and a sensing element (surface number column in Table 10B → image plane) in the lens module 400 in this example. Table 10C shows conic coefficients and aspheric coefficients of the eight lenses in the optical system 10 in this example on the object side surface S1 and the image side surface S2. It may be learned from Table 10C that the first lens L1 to the eighth lens L8 include a total of 16 aspheric surfaces.

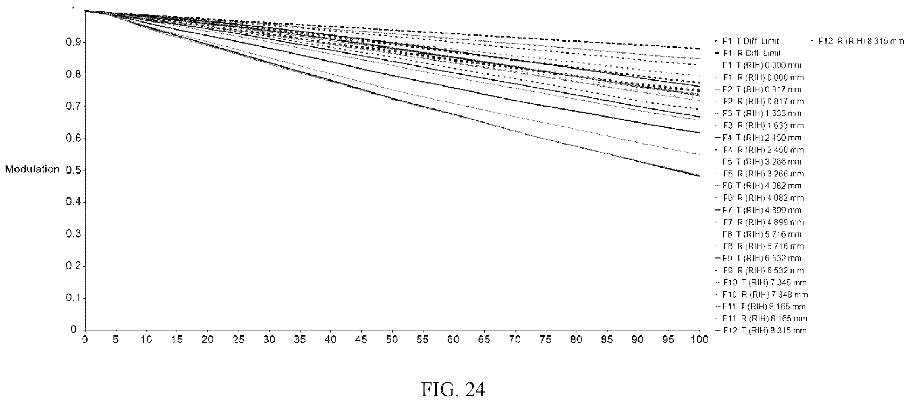

In addition, FIG. 24 is a line graph of a diffraction modulation transfer function of the lens module 400 in this example. It may be learned from FIG. 24 that the lens module 400 in this example can implement high-quality imaging.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical system, comprising the following sequentially spaced apart along an optical axis from an object side to an image side:

a stop;

a first lens, having positive focal power;

a second lens, ..., and an $(N-2)^{th}$ lens, wherein each of the second lens to the $(N-2)^{th}$ lens has focal power, and a value of N is 7 or 8;

an $(N-1)^{th}$ lens, having positive focal power, wherein an object side surface that is of the $(N-1)^{th}$ lens and that is near the optical axis is a convex surface, an image side surface that is of the $(N-1)^{th}$ lens and that is near the optical axis is a concave surface, and at least one of the object side surface and the image side surface of the $(N-1)^{th}$ lens has an inflection surface; and

an $N^{th}$ lens, having negative focal power, wherein an object side surface that is of the $N^{th}$ lens and that is near the optical axis is a concave surface, an image side surface that is of the $N^{th}$ lens and that is near the optical axis is a convex surface, and at least one of the object side surface and the image side surface of the $N^{th}$ lens has an inflection surface, wherein

the optical system satisfies the following conditions:

$$-4 \leq SAGn_2/CT_n \leq -2;$$

$$1 \leq SP_{n-1}/(CT_{n-1}+CT_n) \leq 1.8;$$

and

$$(2 \times IMH/TTL)^2/FNO \geq 1.5,$$

wherein

$SAG_{n2}$ is a maximum sagittal height of the image side surface of the $N^{th}$ lens, $SP_{n-1}$ is a thickness of an air gap between the $(N-1)^{th}$ lens and the $N^{th}$ lens along an optical axis direction, $CT_n$ is a center thickness of the $N^{th}$ lens along the optical axis direction, $CT_{n-1}$ is a center thickness of the $(N-1)^{th}$ lens along the optical axis direction, IMH is a half-image height of the optical system, TTL is a distance from an object side surface of the first lens to an imaging plane along the optical axis direction, and FNO is an F-number of the optical system.

2. The optical system according to claim 1, wherein the value of N is 7, the second lens and the third lens both have negative focal power, and the fourth lens has positive focal power.

3. The optical system according to claim 2, wherein the optical system further satisfies the following condition:

$$1.8 \leq CT_1/(CT_2+CT_3) \leq 3,$$

wherein

$CT_1$ is a center thickness of the first lens along the optical axis direction, $CT_2$ is a center thickness of the second lens along the optical axis direction, and $CT_3$ is a center thickness of the third lens along the optical axis direction.

4. The optical system according to claim 2 or 3, wherein the optical system further satisfies the following condition:

$$-4 \leq f_{23}/f_1 \leq -1,$$

wherein

$f_{23}$ is a combined focal length of the second lens and the third lens, and $f_1$ is a focal length of the first lens.

5. The optical system according to any one of claims 2 to 4, wherein the optical system further satisfies the following condition:

$$1 \leq (CT_3+CT_4)/(ET_3+ET_4) \leq 2,$$

wherein

$CT_3$ is the center thickness of the third lens along the optical axis direction, $CT_4$ is a center thickness of the fourth lens along the optical axis direction, $ET_3$ is an edge thickness of the third lens along the optical axis direction, and $ET_4$ is an

edge thickness of the fourth lens along the optical axis direction.

6. The optical system according to any one of claims 2 to 5, wherein the optical system further satisfies the following condition:

$$2.5 \leq AB_1/AB_2 \leq 6,$$

wherein
$AB_1$ is an Abbe number of the first lens, and $AB_2$ is an Abbe number of the second lens.

7. The optical system according to any one of claims 2 to 6, wherein the optical system further satisfies the following condition:

$$f \times \tan(HFOV) > 6 \text{ mm},$$

wherein
f is an effective focal length of the optical system, and HFOV is a maximum half field of view of the optical system.

8. The optical system according to claim 1, wherein the value of N is 8; the second lens has negative focal power, and an image side surface that is of the second lens and that is near the optical axis is a concave surface; an object side surface that is of the third lens and that is near the optical axis is a convex surface; the fifth lens has positive focal power; and an image side surface that is of the sixth lens and that is near the optical axis is a concave surface.

9. The optical system according to claim 8, wherein the optical system further satisfies the following condition:

$$1.3 \leq CT_3/CT_2 \leq 2,$$

wherein
$CT_2$ is a center thickness of the second lens along the optical axis direction, and $CT_3$ is a center thickness of the third lens along the optical axis direction.

10. The optical system according to claim 8 or 9, wherein the optical system further satisfies the following condition:

$$0.7 \leq (R_{71}+R_{72})/f_7 \leq 1.6,$$

wherein
$R_{71}$ is a curvature radius of an object side surface of the seventh lens, $R_{72}$ is a curvature radius of an image side surface of the seventh lens, and $f_7$ is a focal length of the seventh lens.

11. The optical system according to any one of claims 8 to 10, wherein the optical system further satisfies the following condition:

$$-3 \leq f_{456}/f \leq -1,$$

wherein
$f_{456}$ is a combined focal length of the fourth lens, the fifth lens, and the sixth lens, and f is an effective focal length of the optical system.

12. The optical system according to any one of claims 8 to 11, wherein the optical system further satisfies the following condition:

$$2.4 \leq AB_1/AB_6 \leq 5,$$

wherein
$AB_1$ is an Abbe number of the first lens, and $AB_6$ is an Abbe number of the sixth lens.

13. The optical system according to any one of claims 8 to 12, wherein near the optical axis, at least one of the object side surface of the first lens and an object side surface of the second lens is a convex surface.

14. A lens module, comprising the optical system according to any one of claims 1 to 13 and a photosensitive element, wherein the optical system and the photosensitive element are sequentially disposed along an optical axis from an object side to an image side.

15. An electronic device, comprising a housing and the lens module according to claim 14, wherein the lens module is disposed on the housing.

1000

100

200

FIG. 1

FIG. 2

1000

FIG. 3

FIG. 4

FIG. 5

FIG. 6

FIG. 7

400

FIG. 8

FIG. 9

400

FIG. 10

FIG. 11

400

30

20

10

L7

L6

L5

1

L4

L1  L2  L3

FIG. 12

FIG. 13

FIG. 14

FIG. 15

FIG. 16

EP 4 610 707 A1

FIG. 17

72

FIG. 18

EP 4 610 707 A1

FIG. 19

74

FIG. 20

400

FIG. 21

FIG. 22

FIG. 23

FIG. 24

**INTERNATIONAL SEARCH REPORT**

| International application No. |
| --- |
| **PCT/CN2023/138124** |

| A. | CLASSIFICATION OF SUBJECT MATTER |
| --- | --- |

G02B13/00(2006.01)i;  G02B13/06(2006.01)i;  G02B13/18(2006.01)i;  G03B17/12(2021.01)i;  G03B30/00(2021.01)i

According to International Patent Classification (IPC) or to both national classification and IPC

| B. | FIELDS SEARCHED |
| --- | --- |

Minimum documentation searched (classification system followed by classification symbols)

IPC: G02B G03B

Documentation searched other than minimum documentation to the extent that such documents are included in the fields searched

Electronic data base consulted during the international search (name of data base and, where practicable, search terms used)

CNABS; CNTXT; VEN; ENTXT; ENTXTC; CNKI; JPABS: 第一, 第1, 透镜, 镜头, 镜片, 正, 第六, 第6, 第七, 第7, 负, 第八, 第8, first, 1st, lens??, positive, sixth, 6th, seventh, 7th, negative, eighth, 8th

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114047595 A (HUAWEI TECHNOLOGIES CO., LTD.) 15 February 2022 (2022-02-15) description, paragraphs [0005]-[0423], and figures 1-35c | 1-15 |
| X | CN 115016097 A (AAC OPTICS (SUZHOU) CO., LTD.) 06 September 2022 (2022-09-06) description, paragraphs [0038]-[0236], and figures 1-20 | 1-7, 14, 15 |
| X | CN 111308649 A (ZHEJIANG SUNNY OPTICS CO., LTD.) 19 June 2020 (2020-06-19) description, paragraphs [0048]-[0171], and figures 1-16D | 1, 8-15 |
| A | CN 109283657 A (LARGAN PRECISION CO., LTD.) 29 January 2019 (2019-01-29) entire document | 1-15 |

☐ Further documents are listed in the continuation of Box C.    ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 January 2024** | **14 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/138124**

| Patent document cited in search report | | | Publication date (day/month/year) | Patent family member(s) | Publication date (day/month/year) |
|---|---|---|---|---|---|
| CN | 114047595 | A | 15 February 2022 | None | |
| CN | 115016097 | A | 06 September 2022 | None | |
| CN | 111308649 | A | 19 June 2020 | None | |
| CN | 109283657 | A | 29 January 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310265591